(19)

**Europäisches Patentamt**
**European Patent Office**
**Office européen des brevets**

(11) **EP 3 121 582 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(51) Int Cl.:
*G01N 3/08* *(2006.01)*     *G01N 19/04* *(2006.01)*

(21) Anmeldenummer: **16001609.3**

(22) Anmeldetag: **21.07.2016**

(54) **VERFAHREN UND VORRICHTUNG ZUR QUERZUGPRÜFUNG VON BAUMATERIALIEN**

METHOD AND DEVICE FOR TRANSVERSE TESTING OF BUILDING MATERIALS

PROCEDE ET DISPOSITIF DE VERIFICATION DE TRACTION TRANSVERSALE DE MATERIAUX DE CONSTRUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2015 AT 504142015**

(43) Veröffentlichungstag der Anmeldung:
**25.01.2017 Patentblatt 2017/04**

(73) Patentinhaber: **Putz, Stefan**
**4822 Bad Goisern (AT)**

(72) Erfinder: **Putz, Stefan**
**4822 Bad Goisern (AT)**

(74) Vertreter: **HGF Europe LLP**
**Neumarkter Str. 18**
**81673 München (DE)**

(56) Entgegenhaltungen:
**DE-C1- 3 438 969**

- **"DIN EN 319:1993-08 Spanplatten und Faserplatten; Bestimmung der Zugfestigkeit senkrecht zur Plattenebene [Particleboards and fibreboards; determination of tensile strength perpendicular to the plane of the board]", DIN EN NORM ENTHALTEN IN: DIN-TASCHENBUCH 365, AUSGABEDATUM: 201, DIN, DE , 31. August 1993 (1993-08-31), Seiten 87-90, XP008182558, Gefunden im Internet: URL:https://www.beuth.de/de/norm/din-en-31 9/2151757**
- **Henkel: "Technisches Merkblatt Ponal Pressal Hydro UF-Furnierleim", , 6 November 2008 (2008-11-06), pages 1-3, XP055501381, Germany Retrieved from the Internet: URL:https://www.haefele.de/prod-live/stati c/WFS/Haefele-HDE-Site/-/Haefele/de_DE/doc uments/01183196_0.pdf?canonicalUrl=/de/pro dukt/furnierleim-ponal-pressal-hydro-zum-f urnieren-und-absperren/00357071 [retrieved on 2018-08-22]**
- **Testresources: "20 Family Universal Test Machine With Digital Controller Dual Column Load Frame", , 26 February 2015 (2015-02-26), XP055502824, Retrieved from the Internet: URL:https://www.testresources.net/media/pd f/120-Family-Test-Machine.pdf [retrieved on 2018-08-28]**

**Beschreibung**

Die vorliegende Erfindung betrifft ein Verfahren und eine Vorrichtung zur Querzugprüfung von Materialien, insbesondere von Baumaterialien aus Holzwerkstoffen wie etwa Spanplatten, MDF-Platten und dergleichen, aber auch Verbundbaustoffe, wie Schichtplatten, Graphitkunststoffe und allgemeine Werkstoffe, die einer Querzugprüfung zu unterwerfen sind.

Bei der Herstellung von Spanplatten, MDF-Platten und anderen Holzwerkstoffen, die insbesondere in der Bau- und Möbelindustrie wie auch im Heimwerkerbereich eingesetzt werden, wird zur Qualitätssicherung regelmäßig eine Querzugprüfung durchgeführt. Dabei wird aus einer Charge oder aus dem laufenden Betrieb eine Stichprobe entnommen und hieraus zunächst ein oder mehrere Prüfkörper hergerichtet. Hierzu wird das Material in quadratische, rechteckige oder zylindrische Stücke gesägt und durch Abblasen, Abfegen, Absaugen oder dergleichen von Staub und sonstigen Rückständen befreit. Sodann wird der so bereitgestellte Prüfkörper zwischen zwei als Joche bezeichneten Prüfkörperträgern, die oft aus Aluminium, einer Aluminiumlegierung oder einem anderen metallischen Werkstoff hergestellt sind, angeklebt und der Klebstoff anschließend aushärten gelassen. Nach Aushärtung des Klebstoffs werden die Joche in eine Querzugmaschine eingespannt und eine Querzugkraft bis zum Bruch des Prüfkörpers aufgebracht. Anschließend werden die Bruchflächen begutachtet. Die Joche können nach Befreiung von den Resten des Prüfkörpers und möglichster Reinigung für weitere Prüfungen verwendet werden.

Der vorstehend geschilderte Ablauf erfolgt herkömmlicherweise von Hand. Obschon dabei auch mit Unterstützung geeigneter Maschinen wie etwa Sägen, Abblasvorrichtungen, Pressen, Fräsen zur Reinigung der Joche, Absaugungen und selbstverständlich der Querzugmaschine zum Aufbringen der Querzugkraft und Erfassung der aufgetretenen Kräfte gearbeitet werden kann, ist der manuelle Aufwand dennoch hoch. Die manuelle Durchführung eines solchen Verfahrens erfordert einen hohen Personaleinsatz. Weiter werden während bestimmter Zeiten wie etwa in der Nacht, am Wochenende oder an Feiertagen, aufgrund des reduzierten Personalbestands keine Stichproben entnommen und keine Prüfungen durchgeführt, auch wenn der Produktionsbetrieb an sich weiterläuft. In diesem Fall werden die Prüfungen nachgeholt, eine frühzeitige Fehlererkennung ist jedoch nicht möglich, zudem erfolgt die nachgeholte Prüfung mit einer geringeren Prüfdichte und es muss dementsprechend mit der Gefahr eines höheren Ausschusses gerechnet werden.

Die manuelle Aufbringung eines Klebstoffs bedingt eine vergleichsweise hohe Toleranz bzw. Variabilität in der aufgebrachten Klebstoffmenge, dem applizierten Klebstoffmuster und der Zeit, die zwischen dem Auftragen des Klebstoffs und Verpressen des Prüfkörpers mit den Jochen verstreicht.

All diese Parameter beeinflussen die tatsächlich bewirkte Klebkraft zwischen dem Prüfkörper und den Jochen, was wiederum das Ergebnis des Querzugversuchs beeinflussen kann.

Wird zu wenig Klebstoff aufgetragen oder vergeht eine so lange Zeit zwischen dem Auftragen des Klebstoffs und dem Zusammenfügen des Prüfkörpers mit den Jochen, dass der Klebstoff bereits beginnt abzubinden bzw. eine Haut zu bilden, ist die Klebkraft niedriger als ausgelegt.

Wird zu viel Klebstoff aufgetragen, kann es aufgrund eines breiteren Klebspalts zu einer Verringerung der Klebkraft, bei Eindringen einer hohen Menge von Klebstoff in das Material des Prüfkörpers andererseits auch zu einer Erhöhung der Klebkraft, und bei Austreten von Klebstoff aus dem Klebspalt, was zur Bildung von Klebstoffraupen und gegebenenfalls zum Hochwandern des Klebstoffs an den Schmalseiten des Prüfkörpers führen kann, zu einer unkontrollierbaren und schwer vorhersagbaren Veränderung in Klebkraft und Materialfestigkeit kommen.

Ferner kann es bei manueller Handhabung sein, dass der Prüfkörper zwischen den Jochen beim Verkleben bzw. Pressen verrutscht, was eine undefinierte Prüfgeometrie bewirkt.

Zur Vermeidung der Raupenbildung ist schon vorgeschlagen worden, den Klebeflächen an den Jochen eine erhabene Form zu geben, dies erschwert jedoch die Reinigung der Joche und kann auch zu verstärktem Verrutschen führen.

Weitere Faktoren können die Klebung zwischen dem Prüfkörper und den Jochen beeinflussen und die Nachvollziehbarkeit der Prüfergebnisse erschweren. So kann z. B. die Klebung durch vorhandene Werkstofffeuchte behindert bzw. beeinflusst werden. Auch eine Vorreaktion des Klebstoffs kann zu einer undefinierten Klebkraft führen. Das Abfräsen der Joche nach dem Querzugversuch gelingt oft nicht zufriedenstellend, was zu einer verschlechterten Oberflächenbeschaffenheit der Joche führen kann, sodass Klebstoff in Unebenheiten der Oberflächen der Joche eintreten kann und ebenfalls das Klebergebnis und die Reproduzierbarkeit des Zugversuchs beeinflussen kann. In Extremfällen kann, wenn die Klebkraft unter die Bruchfestigkeit des zu prüfenden Materials fällt, zur völligen Unbrauchbarkeit des Versuchs kommen, da sich der Prüfkörper vom Joch löst, bevor der Prüfkörper bricht.

All die vorgenannten Probleme sind bisher nicht zufriedenstellend gelöst.

DIN EN319:1993-08 beschreibt einen Querzugversuch zur Bestimmung der Zugfestigkeit senkrecht zur Plattenebene an einem Prüfkörper definierter Abmessung, der zwischen zwei Jochen eingeklebt ist.

DE 34 38 969 C1 offenbart eine Prüfeinrichtung mit einer zur Aufnahme eines Probestreifens geeigneten Eingangsstation, einer Ablängstation zum Ablängen von Prüflingen vom Probestreifen, eine Mehrzahl von Prüfstationen, und einen Vorschubschlitten zum Transportieren des Prüflings. Zur Querzugprüfung greifen Leisten eines festen Unterteils und eines beweglichen Oberteils eines Prüfkopfes klauenartig in randseitige Nuten des Prüflings, sodass dieser bei Auseinanderfahren des Oberteils auseinanderreißt.

Demzufolge besteht eine Aufgabe der vorliegenden Erfindung darin, ein Verfahren und eine Vorrichtung zur Querzugprüfung von Baumaterialien bereitzustellen, welche die oben genannten Nachteile im Stand der Technik wenigstens in Teilaspekten vermeiden oder zumindest verbessern.

Die Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Es ist eine weitere Aufgabe der vorliegenden Erfindung eine Vorrichtung zur Querzugprüfung zu schaffen, mit der Querzugprüfungen automatisiert werden, mit einer Verbesserung der Reproduzierbarkeit und Vergleichbarkeit der Prüfungsergebnisse.

Die Aufgabe wird mit einer Vorrichtung mit den Merkmalen des Anspruchs 14 gelöst.

Vorteilhafte Weiterbildungen sind in den hiervon abhängigen Unteransprüchen gekennzeichnet.

Es ist darüber hinaus eine Aufgabe eine Montageeinheit zur Herstellung einer Prüfkörpereinheit zu schaffen, welche es ermöglicht die Prüfung automatisiert und effektiv sowie nachvollziehbar durchzuführen.

Die Aufgabe wird mit einer Montageeinheit mit den Merkmalen des Anspruchs 12 gelöst.

Vorteilhafte Weiterbildungen sind in den hiervon abhängigen Unteransprüchen gekennzeichnet.

Das erfindungsgemäße Verfahren zur Querzugprüfung von Baumaterialien weist die Schritte Anspruchs 1 auf.

Eine erfindungsgemäß geeignete Klebstoffmenge ist beispielsweise 0,1 g bis 0,3 g pro 25 cm².

Eine geeignete Anpresskraft liegt zwischen 950 N und 1.200 N, insbesondere zwischen 1.000 N und 1.100 N. Eine geeignete Anpresszeit ist insbesondere 4 min bis 7 min, vorzugsweise 5 min bis 6 min.

Unter einer Querzugprüfung wird im Sinne der Erfindung ein Zugversuch verstanden, in welchem der Prüfkörper zwischen zwei parallelen seiner Oberflächen eingespannt ist und parallel zu den eingespannten Oberflächen gezogen wird.

Das Herrichten des Prüfkörpers kann ein Bereitstellen eines Stücks von vorgegebenen Prüfkörperabmessungen aus einer Charge des Baustoffs aufweisen.

Der Baustoff kann insbesondere ein Holzwerkstoff wie etwa ein Holzspanwerkstoff oder Holzfaserwerkstoff sein. Die Charge kann insbesondere eine Platte sein. Die Platte kann insbesondere eine dichtere Randschicht und eine weniger dichte Mittelschicht aufweisen, wobei ein Schichtübergang fließend sein kann.

Das Herrichten eines Stücks von vorgegebener Geometrie kann vorzugsweise durch Sägen erfolgen; es sind aber auch andere Schneidverfahren wie etwa Wasserstrahlschneiden, LaserSchneiden oder andere denkbar.

Unter einer vorgegebenen Geometrie wird insbesondere ein rechteckiger Plattenabschnitt von abgelängter Länge und Breite verstanden, während die Stärke, insbesondere Plattenstärke, unverändert belassen wird, da es bei der Herstellung von Holzwerkstoffplatten maßgeblich auf die Reproduzierbarkeit des Querschnittsaufbaus ankommt.

Ein Joch ist im Sinne der Erfindung jeder geeignete Prüfkörperträger, der zum Einspannen in einen Zugprüfungsapparat ausgebildet ist.

Unter einer definierten Klebstoffmenge ist zu verstehen, dass sowohl eine erste Klebstoffmenge zwischen dem Prüfkörper und dem ersten Joch als auch eine zweite Klebstoffmenge zwischen dem Prüfkörper und dem zweiten Joch vorgegeben sind und kontrolliert aufgebracht werden.

Die definierte Anpresskraft kann z. B. durch Vorgeben und kontrolliertes Aufbringen eines entsprechenden Anpressdrucks eines Presszylinders verwirklicht werden. Durch das Verwenden einer definierten Klebstoffmenge und einer definierten Anpresskraft kann sichergestellt werden, dass der Klebespalt eine reproduzierbare Dicke aufweist. Ferner kann bei geeigneter Auswahl der definierten Klebstoffmenge und der definierten Anpresskraft ein vollständiges Benetzen der Klebeflächen bei Vermeidung einer Bildung von Klebstoffraupen verwirklicht werden. Daher kann die Reproduzierbarkeit der Klebkraft zwischen dem Prüfkörper und den Jochen verbessert und die Reproduzierbarkeit und Zuverlässigkeit von Prüfergebnissen bei der Querzugprüfung verbessert werden.

Vorzugsweise erfolgt das Anpressen für eine definierte Anpresszeit. Damit kann auch die Zeit, die der Klebstoff zur Verfügung hat, um unter Druck in den Werkstoff des Prüfkörpers einzudringen, gesteuert werden. Dadurch kann die Reproduzierbarkeit der Klebkraft und der Prüfergebisse weiter verbessert werden.

Vorzugsweise weist der Schritt des Anklebens die Schritte auf:

- Bereitstellen des ersten Jochs;
- Auftragen eines Klebstoffs auf dem ersten Joch und/oder einer ersten Seite des Prüfkörpers;
- Aufsetzen des Prüfkörpers auf dem ersten Joch;
- Bereitstellen des zweiten Jochs;
- Auftragen eines Klebstoffs auf dem zweiten Joch und/oder einer zweiten Seite des Prüfkörpers, die von der ersten Seite abgewandt ist; und
- Aufsetzen des zweiten Jochs auf dem Prüfkörper,

wobei der Schritt des Anpressens einen einzigen Anpressschritt nach Aufsetzen des zweiten Jochs aufweist oder einen ersten Anpressschritt nach dem Aufsetzen des Prüfkörpers auf dem ersten Joch und einen zweiten Anpressschritt nach Aufsetzen des zweiten Jochs auf den Prüfkörper aufweist. Die Seiten des Prüfkörpers, die mit den Jochen verklebt werden, sind insbesondere die Flachseiten des Prüfkörpers.

Dabei kann der Klebstoff jeweils mit einer vorgegebenen Klebstoffgeometrie aufgetragen werden, wobei die vorgegebene Klebstoffgeometrie insbesondere eine Mehrzahl von Flecken, Streifen, Wellen, Kringeln, Ringen, Rahmen oder dergleichen aufweist. Durch geeignete Wahl der Klebstoffgeometrie kann auch eine Raupenbildung bzw. ein Klebstoffaustritt aus dem Klebespalt bei definiertem Anpressdruck minimiert oder vermieden werden.

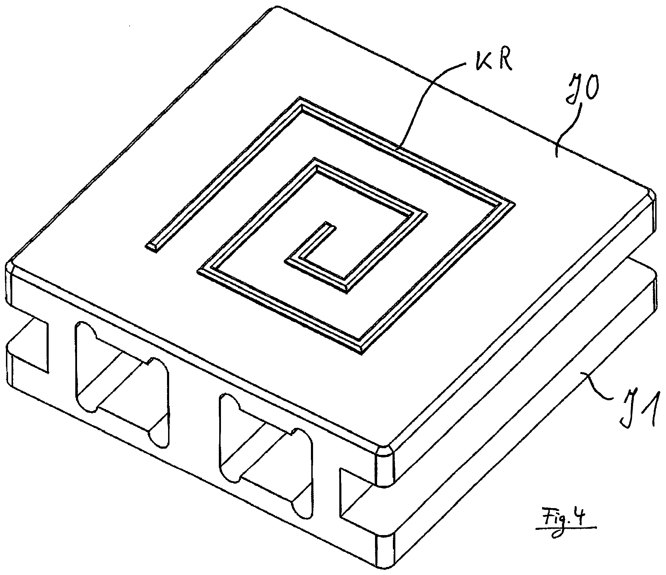

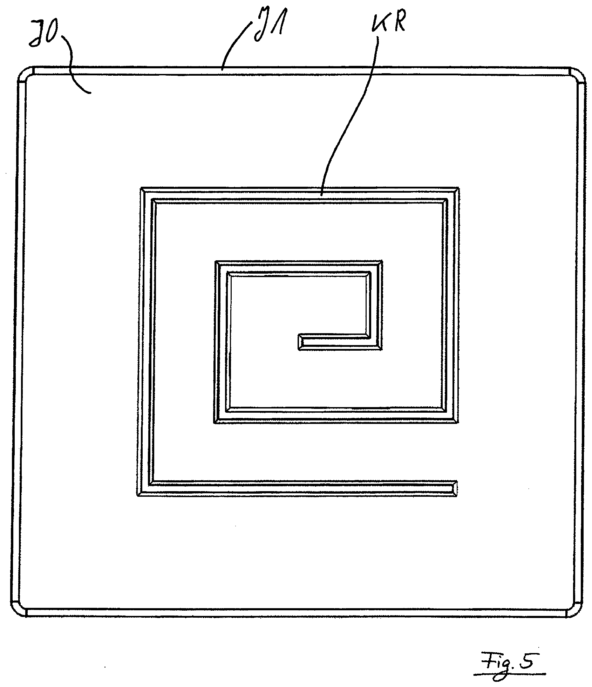

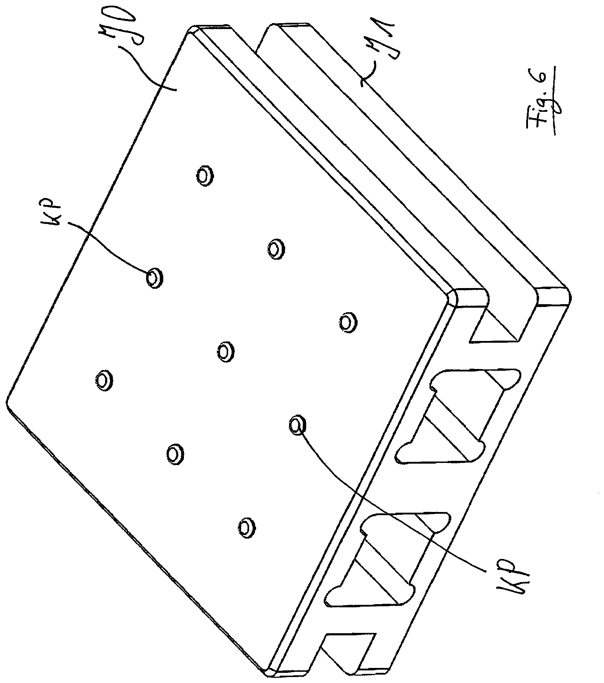

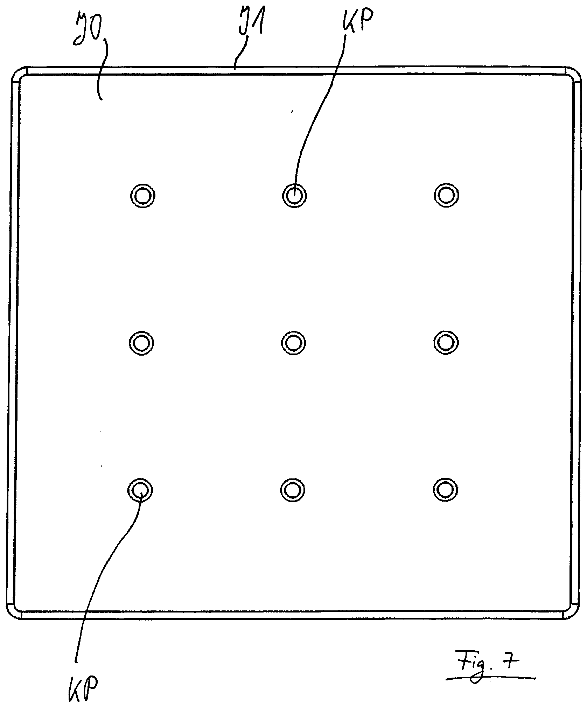

Erfindungsgemäß geeignete Klebstoffgeometrien ergeben sich aus den Figuren 4 bis 7. Hieraus erkennt man, dass einerseits eckig-spiralförmige Klebstoffaufträge, aber auch punktuelle Klebstoffaufträge geeignet sind, wobei diese nicht abschließend sondern lediglich beispielhaft sind.

Vorzugsweise ist in dem Verfahren dieses Gesichtspunkts eine Rheologie des Klebstoffs so eingestellt, dass ein Eindringen des Klebstoffs in Oberflächen des Prüfkörpers vermieden oder minimiert wird.

In einer vorteilhaften Ausgestaltung ist der Klebstoff gelartig.

Durch Kapillarwirkung in Baumaterialien wie etwa Spanplatten oder MDF-Platten oder anderen Holzwerkstoffen ist es oft nicht zu vermeiden, dass ein flüssiger Klebstoff in den Prüfkörper eindringt, was bei unterschiedlichen Prüfkörpern, die unterschiedlichen Chargen entnommen sind, unterschiedlich ausgeprägt sein kann. Da das Eindringen des Klebstoffs in den Prüfkörper die Klebkraft wie auch die Materialfestigkeit des Prüfkörpers verändert, würde auch das Ergebnis der Querzugprüfung beeinflusst werden können. Es könnte aber nicht mehr nachvollzogen werden, ob die Veränderung des Prüfergebnisses auf einer veränderten Festigkeit des Werkstoffs des Prüfkörpers oder einer veränderten Klebkraft des Klebstoffs an sich beruht. Wenn die Rheologie des Klebstoffs aber so eingestellt ist, dass ein Eindringen des Klebstoffs in eine Oberfläche des Prüfkörpers vermieden oder wenigstens minimiert wird, insbesondere durch Verwendung eines gelartigen Klebstoffs, kann die Reproduzierbarkeit und Interpretierbarkeit der Prüfergebnisse weiter verbessert werden.

Vorzugsweise wird bei dem Verfahren ein Klebstoff auf Cyanidbasis, insbesondere auf Basis eines Isocyanats, verwendet. Es ist bekannt, dass Isocyanate mit Hilfe von Luftfeuchtigkeit abbinden können. Im Zusammenhang mit dem Verfahren dieses Erfindungsgesichtspunkts kann bei der Verklebung des Prüfkörpers mit den Jochen die Restfeuchte im Werkstoff des Prüfkörpers besonders vorteilhaft ausgenutzt werden. Hierdurch kann die Klebwirkung verbessert und die Abbindezeit verringert werden.

Vorzugsweise weist das Verfahren ferner einen Schritt einer Evaluierung des Bruchergebnisses auf, wobei die Evaluierung vorzugsweise eine Bildaufnahme von Bruchflächen des Prüfkörpers und insbesondere eine Bildanalyse aufweist. Durch eine Bildanalyse kann die Begutachtung der Bruchflächen automatisiert werden und damit Personalkosten eingespart werden, ebenso kann hierdurch eine Begutachtung der Bruchflächen standardisiert werden und somit die Reproduzierbarkeit des Prüfergebnisses weiter verbessert werden. Die Bildaufnahme selbst kann auch zu Nachweiszwecken archiviert werden. Ferner erlaubt die Bildaufnahme auch eine Begutachtung und einen Vergleich mehrerer Versuche durch eine Fachkraft. Die Evaluierung kann auch eine manuelle Sichtprüfung beinhalten.

Vorzugsweise weist.das Verfahren dieses Erfindungsgesichtspunkts einen Schritt eines Reinigens des ersten Jochs und des zweiten Jochs von Resten des Prüfkörpers auf, wobei der Schritt der Reinigung wenigstens einen der Schritte aufweist:

- Mechanisches Entfernen von Resten des Prüfkörpers, vorzugsweise bis knapp über die Oberfläche des ersten bzw. zweiten Jochs;
- Beaufschlagen mit Heißdampf;
- Kryogene Reinigung, insbesondere Abstrahlen mit Trockeneis.

Das mechanische Entfernen kann beispielsweise ein Abfräsen, Abhobeln, Abschaben, Abstemmen oder dergleichen aufweisen. Die mechanische Entfernung von Resten des Prüfkörpers, das auch Klebstoffreste mit umfasst, bis knapp über die Oberfläche des jeweiligen Jochs vermeidet Beschädigungen an der Oberfläche des Jochs.

Eine Abtragtiefe kann auch automatisch, etwa sensorisch, überwacht werden.

Ein Beaufschlagen mit Heißdampf (Abdampfen) macht von einer Heißdampfempfindlichkeit des Binder/Feststoff-Systems vieler Holzwerkstoffe vorteilhaft Gebrauch, da ein solches System durch Heißdampf angelöst oder aufgelöst werden kann und somit eine schonende Reinigung von verbleibenden Resten ermöglicht wird. Zudem fällt bei der Herstellung von Spanplatten und dergleichen sehr viel Dampf an, so dass dieser leicht verfügbar ist.

Insbesondere bei Verwendung eines Cyanidklebers, insbesondere Isocyanat-Klebers, ist die Behandlung mit Heißdampf besonders wirkungsvoll, sodass sich eine synergistische Zusammenwirkung dieses Reinigungsverfahrens mit der Wahl des Binders der geprüften Platte ergeben kann.

Eine kryogene Reinigung kann z. B. ein schockartiges Abkühlen auf tiefe Temperaturen weit unter 0 °C aufweisen. Durch rasche Abkühlung können Material- bzw. Kleberreste verspröden und gegebenenfalls von selbst von der Oberfläche der Joche springen, oder sie lassen sich mit Hilfe eines Schabers oder ähnlichen geeigneten Werkzeugs leicht lösen. Wenn die kryogene Reinigung mit Hilfe eines Abstrahlens mit Trockeneis erfolgt, kann auch von abrasiven Eigenschaften des Trockeneises vorteilhaft Gebrauch gemacht werden; zudem ist die Verwendung von Trockeneis, insbesondere auf der Basis von Kohlendioxid, gut beherrschbar, vergleichsweise kostengünstig und umweltfreundlich.

Vorzugsweise weist das Verfahren dieses Erfindungsgesichtspunkts einen Schritt einer Dichteprüfung vor dem Schritt des Anklebens auf, wobei der Schritt der Dichteprüfung vorzugsweise die Schritte einer Dickenmessung und einer Wiegung aufweist. Die Dichte des geprüften Materials ist ein wichtiger Parameter bei der Bewertung der Prüfergebnisse. Da die Abmessungen des Prüfkörpers in den Richtungen entlang seiner Flächenausdehnung durch die Herrichtung vorgegeben sind, die Dicke jedoch durch den Produktionsprozess, einen Restfeuchtegehalt und andere Einflüsse beeinflusst wird und daher schwanken kann, kann durch Messen der Dicke des Prüfkörpers und Wiegen des Prüfkörpers dessen Dichte durch die Formel

$$\text{Dichte} = \text{Masse}/\text{Volumen} = \text{Masse}/(\text{Dicke} \times \text{Länge} \times \text{Breite})$$

bestimmt werden.

Vorzugsweise erfolgt die Durchführung des Verfahrens dieses Erfindungsgesichtspunkts automatisch, insbesondere robotisch, und besonders bevorzugt durch einen Prüfautomaten, der vorzugsweise mit einem Roboterarm ausgerüstet ist. Ein Automat kann zur Durchführung der verschiedenen Verfahrensschritte eine Mehrzahl von Stationen aufweisen. Dabei kann mit Hilfe des Roboterarms der Prüfkörper, eine aus Prüfkörper und den zwei Jochen bestehende Prüfkörpereinheit bzw. die Joche mit oder ohne Bruchstückreste von einer Bearbeitungsstation zur anderen verbracht werden. Wahlweise kann zur Bereitstellung und zum Abtransport der Prüfkörper und Joche und für andere Transportaufgaben auch eine Förderbandtechnologie verwendet werden. Vorzugsweise werden auf dem Automaten mehrere Prüfkörper gleichzeitig verarbeitet.

Hierbei kann insbesondere vorgesehen sein, dass mehrere Prüfkörper sich in unterschiedlichen Fortschrittsgraden des Anklebungs-, Aushärtungs- und Prüfungsprozesses befinden, und andere Prüfkörper und Joche in der Zwischenzeit durch den Roboterarm transportiert werden. So kann z. B. ein erster Prüfkörper sich in einer Vorreinigung befinden, ein zweiter Prüfkörper sich in Dickenmessung befinden, ein dritter Prüfkörper sich in Wiegung befinden, ein vierter Prüfkörper an sein erstes Joch gepresst werden, ein fünfter Prüfkörper sich in einem Zwischenaushärteschritt befinden, ein sechster Prüfkörper gerade mit seinem zweiten Joch verpresst werden, ein siebter, achter und neunter Prüfkörper sich in unterschiedlichen Stadien einer Endaushärtung befinden, ein zehnter Prüfkörper sich im Zugversuch befinden und ein elfter Prüfkörper sich in Evaluierung befinden, während die Joche eines zwölften Prüfkörpers gereinigt werden. Die Verbringung zwischen den einzelnen Stationen durch den Roboterarm kann in einer vorgegebenen Reihenfolge oder einer Fuzzylogic folgend durchgeführt werden.

Besonders vorteilhaft ist es somit, wenn genau ein Roboterarm vorgesehen ist, der die Verbringung der Prüfkörper und Joche wie oben beschrieben durchführt. Gleichwohl ist auch eine Mehrzahl von Roboterarmen von der Erfindung umfasst.

Ein weiterer Gesichtspunkt der vorliegenden Erfindung betrifft eine Montageeinheit zur Herstellung einer Prüfkörpereinheit mit einem zwischen zwei Jochen verklebten Prüfkörper, wobei die Prüfkörpereinheit insbesondere ausgebildet ist, um den Prüfkörper einer Querzugprüfung zu unterziehen, wobei die Montageeinheit ausgebildet ist, um die Joche mit dem dazwischen angeordneten Prüfkörper in zueinander definierter Lage zur Verklebung miteinander aufzunehmen.

Der Prüfkörper ist vorzugsweise vorab aus einem insbesondere plattenförmigen Baumaterial eines Holzwerkstoffs hergerichtet. Eine solche Montageeinheit, die die Joche mit dem dazwischen angeordneten Prüfkörper in zueinander definierter Lage zur Verklebung miteinander aufnimmt, ist eine wesentliche Voraussetzung für eine automatisierte Herstellung der Prüfkörpereinheit. Die Montageeinheit ist somit insbesondere zur Ausführung des vorstehend beschriebenen Verfahrens gemäß dem ersten Erfindungsgesichtspunkt ausgebildet. Die Montageeinheit kann auch eine erhebliche Erleichterung bei einer manuellen oder teilmanuellen Herstellung der Prüfkörpereinheit sein und bereits dort den Personaleinsatz reduzieren und die Einheitlichkeit der Prüfkörpereinheiten sowie Zuverlässigkeit und Reproduzierbarkeit des Zugversuchs verbessern.

Die Montageeinheit weist eine Aufnahmeeinheit auf, wobei die Aufnahmeeinheit eine Auflageplatte und einen Eckanschlag an einer Ecke der Auflageplatte aufweist, wobei der Eckanschlag ausgebildet ist, um eine Bewegung des ersten Jochs auf der Auflageplatte, eines Prüfkörpers auf dem ersten Joch und eines zweiten Jochs auf dem Prüfkörper jeweils zu begrenzen.

Vorzugsweise weist zu diesem Zweck der Eckanschlag einen ersten Eckanschlag, der an eine Kontur eines ersten Jochs angepasst ist, einen zweiten Eckanschlag, der an eine Kontur eines auf dem ersten Joch angeordneten Prüfkörpers angepasst ist, und einen dritten Eckanschlag, der an eine Kontur eines auf dem ersten Joch angeordneten zweiten Jochs angepasst ist, auf.

Mit anderen Worten, der erste Eckanschlag ist ausgebildet, um eine Ecke auf der Auflageplatte abgelegten eines ersten Jochs in definierter Lage aufzunehmen, der zweite Eckanschlag ist ausgebildet, um eine Ecke eines auf dem ersten Joch abgelegten Prüfkörpers in definierter Lage aufzunehmen, und der dritte Eckanschlag ist ausgebildet, um eine Ecke eines auf dem Prüfkörper aufgelegten zweiten Jochs in definierter Lage aufzunehmen.

Da die Joche in der Regel eine identische seitliche Ausdehnung und Kontur aufweisen und der Prüfkörper in der Regel eine geringere seitliche Ausdehnung als die Joche aufweist, ist es vorteilhaft, wenn der erste und der dritte Eckanschlag als ein durchgehender kombinierter Eckanschlag ausgebildet sind und der zweite Eckanschlag oberhalb der Auflageplatte von dem kombinierten Eckanschlag abragt.

Die Geometrie des Eckanschlags ist insbesondere so an die Geometrie der Joche und des Prüfkörpers angepasst, dass der zweite Eckanschlag in einer Höhe, die höher als eine Dicke des ersten Jochs ist, parallel zu der Auflageplatte von dem ersten bzw. dem kombinierten Eckanschlag aus abragt und eine Bauhöhe aufweist, die geringer als eine Dicke des Prüfkörpers ist, wobei der dritte Eckanschlag oberhalb des zweiten Eckanschlags zurückspringt. Mit einem derart ausgebildeten Eckanschlag ist sichergestellt, dass das erste Joch, das zweite Joch und der dazwischen angeordnete Prüfkörper eine vorgegebene Lage sicher einnehmen. Daher ist die Lage des Prüfkörpers in einer aus erstem Joch, Prüfkörper und zweitem Joch gebildeten Prüfkörpereinheit exakt definiert. Daher ist eine Reproduzierbarkeit und Aussagekraft von Prüfergebnissen bei dem Schrägzugversuch weiter verbessert.

Vorzugsweise ist die Auflageplatte gegenüber der Horizontalen in Richtung der Ecke mit dem Eckanschlag geneigt, wobei eine Neigung der Auflageplatte insbesondere so bemessen ist, dass ein erstes darauf abgelegtes Joch darauf ohne äußeres Zutun in den Eckanschlag gleiten kann. Ein Neigungswinkel der Auflageplatte zur Horizontalen beträgt vorteilhaft mehr als 15 Grad, vorzugsweise bis 45 Grad. Mit anderen Worten, die Aufnahmeeinheit ist ausgebildet, um zunächst ein erstes Joch aufzunehmen und in einer vorgegebenen Lage abzustützen, dann einen auf dem ersten Joch abgelegten Prüfkörper aufzunehmen und in einer vorbestimmten Lage relativ zu dem ersten Joch abzustützen und schließlich ein auf dem Prüfkörper abgelegtes zweites Joch in einer vorbestimmten Lage relativ zu dem ersten Joch und dem Prüfkörper abzustützen, wobei das erste Joch, der Prüfkörper und das zweite Joch aufgrund der Neigung der Auflageplatte im Wesentlichen durch Schwerkraft an den Eckanschlag gedrückt und dadurch in ihrer Lage gehalten werden.

Dies führt zu einer beträchtlichen Vereinfachung und Vorteilen bei einer Automatisierung, da die Bauteile erstes Joch, Prüfkörper und zweites Joch, insbesondere das erste Joch, quasi von selbst in die richtige Lage gleiten. Dabei kann die Neigung der Auflageplatte zusätzlich so bemessen sein, dass ein Ausweichen der durch eine Kleberschicht voneinander getrennten Bauteile bei Druckbeaufschlagung vermieden werden kann. Es ist daher eine sensorisch oder optisch überwachte Ausrichtung der Bauteile nicht mehr oder nur mit reduzierten Anforderungen erforderlich.

In einer bevorzugten Ausführungsform weist die Montageeinheit eine Druckbeaufschlagungseinheit auf, wobei die Druckbeaufschlagungseinheit insbesondere ausgebildet ist, um parallel oder im Wesentlichen parallel zu einer Flächennormalen der Auflageplatte und mit einem Druckschwerpunkt, der einem Flächenschwerpunkt des in der Aufnahmeeinheit aufgenommenen Prüfkörpers entspricht oder im Wesentlichen entspricht, in Richtung der Auflageplatte zu drücken.

Wenn die Druckbeaufschlagungseinheit entweder auf den Prüfkörper oder das zweite Joch Druck ausübt, verschiebt sich bei einer geometrisch derart definierten und geführten Druckausübung eine Relativlage zwischen dem ersten Joch, dem Prüfkörper und dem zweiten Joch nicht, auch wenn eine Kleberschicht zwischen Oberflächen des ersten Jochs und des Prüfkörpers sowie zwischen Oberflächen des Prüfkörpers und des zweiten Jochs aufgebracht sind.

Da die Druckbeaufschlagungseinheit und die Aufnahmeeinheit vorzugsweise in einer Montageeinheit baulich zusammengefasst sind, sind die geometrischen Lagebeziehungen und Druckrichtungen unverrückbar festgelegt. Daher ist eine Reproduzierbarkeit und Aussagekraft von Prüfergebnissen bei dem Schrägzugversuch weiter verbessert.

Wenn zusätzlich die Druckbeaufschlagungseinheit ausgelegt ist, eine definierte Presskraft bzw. einen definierten Druck auszuüben, wird sich bei gleicher Klebstoffmenge und gleicher Klebstoffgeometrie und bei ansonsten gleichen Eigenschaften der Joche und des Prüfkörpers stets eine gleiche Verteilung des Klebstoffs und ein gleicher Klebespalt einstellen. Daher sind die Reproduzierbarkeit und die Aussagekraft des Zugversuchs weiter verbessert.

In einer bevorzugten Ausführungsform weist die Montageeinheit ferner eine Klebstoffauftragungseinheit auf, die eingerichtet ist, auf Oberflächen des ersten Jochs und/oder des Prüfkörpers sowie des Prüfkörpers und/oder des zweiten Jochs eine definierte Klebstoffmenge, vorzugsweise in einem definierten Klebstoffmuster, aufzutragen. Die Klebstoffauftragungseinheit kann eine Klebstoffvorhalteeinheit, eine Dosiereinheit und eine Düseneinheit mit einer oder mehreren Düsen aufweisen.

Die Klebstoffauftragungseinheit kann vollständig oder in Teilen baulich mit der Montageeinheit zusammengefasst sein. Beispielsweise kann eine Düseneinheit in einem Druckstempel der Druckbeaufschlagungseinheit integriert sein. Die Klebstoffauftragungseinheit kann vollständig oder in Teilen baulich von der Montageeinheit getrennt sein. Beispielsweise kann eine Klebstoffvorhalteeinheit gemeinsam für mehrere Klebstoffauftragungseinheiten mehrerer Montageeinheiten extern vorgesehen sein.

Ein weiterer Gesichtspunkt der vorliegenden Erfindung betrifft eine Vorrichtung zur Querzugprüfung von Baumaterialien. Die Vorrichtung weist wenigstens ein Gestell, eine Prüfkörperbereitstellungsstation zur Bereitstellung von Prüfkörpern, eine Jochbereitstellungsstation zur Bereitstellung von Jochen, wenigstens eine Klebestation zum Verkleben von Prüfkörpern jeweils zwischen zwei Jochen, um jeweilige Prüfkörpereinheiten mit einem zwischen zwei Jochen verklebten Prüfkörper auszubilden, eine Querzugprüfstation zum Aufbringen einer Querzugkraft auf eine Prüfkörpereinheit, und eine Transportanordnung zum Transportieren von Prüfkörpern und Jochen bzw. Prüfkörpereinheiten zwischen den jeweiligen Stationen der Vorrichtung auf, wobei die Vorrichtung zum vorzugsweise automatischen Durchführen des oben beschriebenen Verfahrens ausgebildet ist.

Vorzugsweise weist die Transporteinrichtung wenigstens einen Roboterarm, vorzugsweise genau einen Roboterarm auf.

Die Klebestation weist wenigstens eine Montageeinheit zur Herstellung einer Prüfkörpereinheit mit einem zwischen zwei Jochen verklebten Prüfkörper auf, die vorzugsweise gemäß dem vorstehend beschriebenen zweiten Erfindungsgesichtspunkt ausgebildet ist. Bevorzugt weist die Klebestation mehrere Montageeinheiten auf. In diesen können Joche und Prüfkörper in unterschiedlichen Fortschrittsgraden der Verklebung und Aushärtung untergebracht sein. Die Anzahl der Montageeinheiten bemisst sich vorteilhaft an einem Prüftakt, in welchem Prüfkörper geprüft werden, und einer Aushärtezeit der verwendeten Klebstoffe.

Vorzugsweise weist die Vorrichtung ferner eine Klebstoffauftragungseinheit auf, die eingerichtet ist, auf Oberflächen des ersten Jochs und/oder des Prüfkörpers sowie des Prüfkörpers und/oder des zweiten Jochs eine definierte Klebstoffmenge, vorzugsweise in einem definierten Klebstoffmuster, aufzutragen. Die Klebstoffauftragungseinheit kann eine Klebstoffvorhalteeinheit, eine Dosiereinheit und eine Düseneinheit mit einer oder mehreren Düsen aufweisen. Die Klebstoffauftragungseinheit kann in dem Roboterarm integriert sein oder kann in der Klebestation integriert oder teilweise integriert sein. Wenigstens Teile der Klebstoffauftragungseinheit können auch gesondert vorgesehen sein. Die Klebstoffauftragungseinheit kann einen beweglichen Düsenkopf aufweisen, der von Montageeinheit zu Montageeinheit verfahrbar ist, oder die Montageeinheiten können zu einer Düseneinheit der Klebstoffauftragungseinheit verfahrbar sein.

In einer bevorzugten Ausführungsform weist die Vorrichtung eine Druckbeaufschlagungseinheit auf, wobei die Druckbeaufschlagungseinheit insbesondere ausgebildet ist, um parallel oder im Wesentlichen parallel zu einer Flächennormalen eines in der Klebestation aufgenommenen Prüfkörpers und mit einem Druckschwerpunkt, der einem Flächenschwerpunkt des in der Klebestation aufgenommenen Prüfkörpers entspricht oder im Wesentlichen entspricht, in Richtung einer Auflage des Prüfkörpers zu drücken. Wenn die Druckbeaufschlagungseinheit entweder auf den Prüfkörper oder das zweite Joch Druck ausübt, verschiebt sich bei einer geometrisch derart definierten und geführten Druckausübung eine Relativlage zwischen dem ersten Joch, dem Prüfkörper und dem zweiten Joch nicht, auch wenn eine Kleberschicht zwischen Oberflächen des ersten Jochs und des Prüfkörpers sowie zwischen Oberflächen des Prüfkörpers und des zweiten Jochs aufgebracht sind. Da die Druckbeaufschlagungseinheit und die Aufnahmeeinheit vorzugsweise in einer Montageeinheit baulich zusammengefasst sind, sind die geometrischen Lagebeziehungen und Druckrichtungen unverrückbar festgelegt. Daher ist eine Reproduzierbarkeit und Aussagekraft von Prüfergebnissen bei dem Schrägzugversuch weiter verbessert. Wenn zusätzlich die Druckbeaufschlagungseinheit ausgelegt ist, eine definierte Presskraft bzw. einen definierten Druck auszuüben, wird sich bei gleicher Klebstoffmenge und gleicher Klebstoffgeometrie und bei ansonsten gleichen Eigenschaften der Joche und des Prüfkörpers stets eine gleiche Verteilung des Klebstoffs und ein gleicher Klebespalt einstellen. Daher sind die Reproduzierbarkeit und die Aussagekraft des Zugversuchs weiter verbessert.

Vorzugsweise weist die Vorrichtung ein Reinraumvolumen auf, in welchem zumindest der Roboterarm und die Klebestation untergebracht sind. Vorzugsweise sind auch Wiege- und Dickenmessungsstationen in dem Reinraumvolumen untergebracht.

Vorzugsweise weist die Vorrichtung eine Abreinigungseinheit auf, die ausgebildet ist, Joche nach Gebrauch von Resten der Prüfkörper und des Klebstoffs zu reinigen.

Vorzugsweise weist die Vorrichtung eine Sichtprobenstrecke auf, die ausgebildet ist, um eine Mehrzahl von Paaren von erstem Joch und zweitem Joch mit jeweils darauf befindlichen Bruchstücken des jeweiligen Prüfkörpers nach dem Zugversuch zu präsentieren. Hierzu ist die Transporteinheit vorzugsweise ausgebildet, um die Paare von erstem Joch und zweitem Joch mit jeweils darauf befindlichen Bruchstücken des jeweiligen Prüfkörpers auf der Sichtprobenstrecke mit nach oben weisenden Bruchstücken auf der Sichtprobenstrecke abzulegen. Insbesondere weist die Sichtprobenstrecke eine Bildaufnahmeeinheit und eine Bildanalyseeinheit auf, wobei die Bildaufnahmeeinheit ausgebildet ist, um die Bruchstücke der Prüfkörper bildlich zu erfassen, und die Bildanalyseeinheit ausgebildet ist, um die erfassten Bilder anhand vorgegebener Kriterien auszuwerten. Die Erfindung wird anhand einer Zeichnung beispielhaft erläutert. Es zeigen dabei:

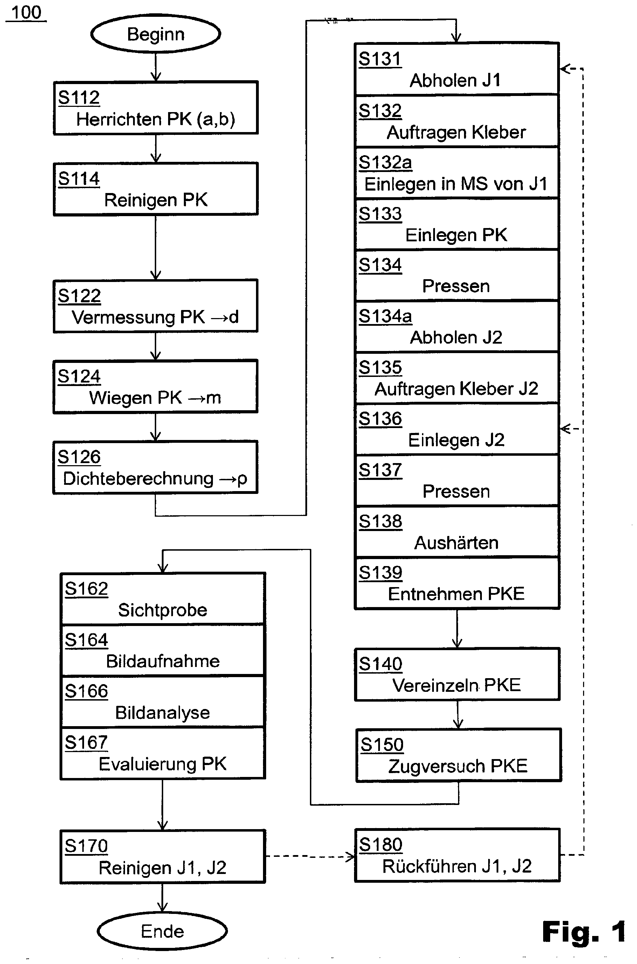

Figur 1:                    ein Ablaufdiagramm eines Verfahrens zur Querzugprüfung von Baumaterialien gemäß einer ersten Ausführungsform der vorliegenden Erfindung;

| Figur 2: | eine Draufsicht einer Querzugprüfanlage nach einem weiteren Ausführungsbeispiel der vorliegenden Erfindung; |
|---|---|
| Figuren 3A bis 3E: | räumliche Ansichten einer Montageeinheit nach einer Ausführungsform der vorliegenden Erfindung in ausgewählten Vorschrittszuständen des in Fig. 1 gezeigten Verfahrens; |
| Figur 4: | eine perspektivische Ansicht auf ein Joch mit aufgebrachter Klebstoffraupe; |
| Figur 5: | die Klebstoffraupe nach Fig. 4 in einer Draufsicht; |
| Figur 6: | ein Joch mit punktförmig aufgebrachtem Klebstoff in einer perspektivischen Ansicht; |
| Figur 7: | das Klebstoffmuster nach Fig. 6 in einer Draufsicht; |
| Figur 8: | eine Schnittdarstellung, in welcher die Säulen oberhalb der Anschlaglaschen geschnitten dargestellt sind und wobei ein Joch, welches eingelegt ist, sichtbar ist; |
| Figur 9: | stark schematisiert eine Einrichtung zum Beheizen der Jochoberflächen; |
| Figur 10: | eine Draufsicht auf ein beheizbares Prüfjoch zeigend eine aufgedruckte Heizspirale; |
| Figur 11: | das Joch nach Fig. 10 in einem Querschnitt; |
| Figur 12: | das Prüfjoch nach Fig. 10 in einer perspektivischen Ansicht; |
| Figur 13: | zeigend den Temperaturdurchfluss von der beheizten Seite zur beklebten Seite eines Jochs; |
| Figur 14: | zeigend ein beklebtes Joch in einer perspektivischen Ansicht von unten auf die Heizfläche; |
| Figur 15: | eine Draufsicht auf die Unterseite des Jochs mit der aufgebrachten Heizschlange; |
| Figur 16: | eine Draufsicht auf die Heizschlange mit Kontaktstellen; |
| Figur 17: | eine perspektivische Ansicht des Jochs nach Fig. 16. |

Die Zeichnungen sind rein schematisch und dienen allein der Veranschaulichung des Prinzips und der Wirkungsweise der vorliegenden Erfindung, nicht der Ableitung konkreter Größenabmessungen, sofern nicht ausdrücklich auf solche Bezug genommen wird. Es sollte verstanden werden, dass die zeichnerische Darstellung dem Verständnis der vorliegenden Erfindung dient und konstruktive Details, die auf die grundlegende erfindungsgemäße Wirkungsweise keinen Einfluss haben, in der Zeichnung weggelassen sein können. Umgekehrt ist zu verstehen, dass nicht jedes in den Zeichnungen gezeigte konstruktive Detail zur Verwirklichung des Erfindungsgedankens zwingend vorhanden oder wie gezeigt ausgebildet sein muss. Der Fachmann wird die gezeigten Ausführungsbeispiele nach seinen Bedürfnissen abändern, umgestalten oder ergänzen, ohne von den die Erfindung kennzeichnenden Merkmalen abzuweichen.

Fig. 1 ist ein Ablaufdiagramm zur Veranschaulichung eines erfindungsgemäßen Verfahrens gemäß einem ersten Ausführungsbeispiel der vorliegenden Erfindung.

Das erfindungsgemäße Verfahren wird anhand eines Prozesses 100 veranschaulicht. Der Prozess 100 beschreibt die Querzugprüfung eines Prüfkörpers PK gemäß diesem Ausführungsbeispiel der erfindung. Der Prozess 100 wird vorzugsweise automatisch durchgeführt. Dies schließt nicht aus, dass einzelne Prozessschritte des Prozesses 100 manuell durchgeführt oder unterstützt oder überwacht werden können. Es wird an dieser Stelle darauf hingewiesen, dass in Fig. 1 Pfeile für das Verbringen eines durch den Prozess 100 verarbeiteten Bauteils an einen anderen Ort oder ein anderes Werkzeug oder eine andere Arbeitsstation stehen, während Prozessblöcke, die ohne Pfeil aufeinander folgen, vorzugsweise am gleichen Ort, im gleichen Werkzeug oder an der gleichen Arbeitsstation durchgeführt werden.

Nach Beginn des Prozesses 100 wird in einem Schritt S112 der Prüfkörper PK hergerichtet bzw. zugeschnitten. Das Zuschneiden des Prüfkörpers PK kann z. B. durch Sägen auf ein vorbestimmtes Längen- und Breitenmaß erfolgen.

In dem anschließenden Schritt S114 wird der Prüfkörper PK gereinigt. Das Reinigen des Prüfkörpers PK kann z. B. durch Absaugen, Abblasen oder dergleichen, ggf. unter Zuhilfenahme eines Wedels, einer Bürste, eines Pinsels oder dergleichen, erfolgen.

In einem anschließenden Schritt S122 wird der Prüfkörper PK vermessen und anschließend in einem Schritt S124 gewogen. Danach wird in einem Schritt S126 die Dichte, genauer gesagt, die mittlere Dichte, des Prüfkörpers PK berechnet. Zur Berechnung der mittleren Dichte ρ des Prüfkörpers PK werden das Wiege- und Vermessungsergebnis sowie die vorgegebenen Zuschnittmaße nach der Formel:

$$\rho = m/(t \times a \times b)$$

verwendet, wobei m für die in Schritt S124 gewogene Masse des Prüfkörpers PK, t für die in Schritt S122 gemessene Dicke des Prüfkörpers PK sowie a und b für die Zuschnittlängen, auf welche der Prüfkörper PK in Schritt S112 zugeschnitten worden ist, stehen.

Nach der Dichteberechnung im Schritt S126 folgt eine Reihe von Prozessschritten S131 bis S139, die vorzugsweise in einer gleichen Montageeinheit durchgeführt werden. Im Einzelnen wird in Schritt S131 ein erstes Joch J1 in die Montageeinheit eingelegt. Danach wird in einem Schritt S132 ein Klebstoff auf eine freiliegende Oberfläche des ersten Jochs J1 oder auf eine freiliegende korrespondierende Oberfläche des Prüfkörpers oder auf das erste Joch J1 und die freiliegende Oberfläche des korrespondierenden Prüfkörpers aufgebracht. Danach wird in einem Schritt S133 der Prüfkörper PK in die Montageeinheit eingelegt, mit anderen Worten, auf das erste Joch J1 gelegt und ausgerichtet. In dem anschließenden Schritt S134 wird der Verbund aus erstem Joch J1 und Prüfkörper PK gepresst. Nach Lösen der Pressung wird in einem Schritt S135 Klebstoff auf eine freiliegende Oberfläche des Prüfkörpers PK aufgetragen. Dann wird in einem Schritt S136 ein zweites Joch J2 in die Montageeinheit eingelegt, d. h., auf den Prüfkörper PK gelegt und ausgerichtet. Dann wird in einem Schritt S137 der Verbund aus erstem Joch J1, Prüfkörper PK und zweitem Joch J2 gepresst. Anschließend wird in einem Schritt S138 der Verbund aus erstem Joch J1, Prüfkörper PK und zweitem Joch J2 ausgehärtet bzw. aushärten gelassen. Schließlich wird in Schritt S139 der nun fest miteinander verklebte Verbund von erstem Joch J1, Prüfkörper PK und zweitem Joch J2, dedr im Folgenden auch als Prüfkörpereinheit PKE bezeichnet wird, aus der Montageeinheit entnommen.

In einer Abwandlung des dargestellten Ausführungsbeispiels kann der Schritt S134, der als ein Zwischenpressschritt verstanden werden kann, weggelassen werden. In einer weiteren Abwandlung kann Klebstoff nicht nur auf die jeweils freiliegenden Oberflächen des ersten Jochs J1 bzw. des Prüfkörpers PK aufgetragen werden, sondern kann Klebstoff auch oder nur auf Oberflächen des noch einzulegenden Prüfkörpers PK und/oder des noch einzulegenden zweiten Jochs J2 aufgetragen werden. Es kann vorteilhaft sein, Klebstoff nur auf die beiden Oberflächen des Prüfkörpers PK aufzutragen, wobei das Auftragen des Klebers beidseitig gleichzeitig erfolgen kann, den so mit Kleber benetzten Prüfkörper auf das bereits eingelegte erste Joch J1 in die Montageeinheit einzulegen und unmittelbar darauf das zweite Joch J2 auf den Prüfkörper in die Montageeinheit einzulegen. In einer weiteren Abwandlung kann zwischen dem Zwischenpressschritt S134 und dem weiteren Auftragen von Kleber und Einlegen des zweiten Jochs J2 eine Pause vorgegebener Dauer eingelegt werden, um den Kleber zwischen dem ersten Joch J1 und dem Prüfkörper PK schon anbinden oder aushärten zu lassen.

In dem anschließenden Schritt S140 erfolgt eine Vereinzelung der Prüfkörpereinheiten PKE. Mit anderen Worten, eine Mehrzahl von Prüfkörpereinheiten PKE kann für den anschließenden Zugversuch bereitgelegt werden, sodass stets Prüfkörpereinheiten PKE fertig zur Verfügung stehen.

In dem anschließenden Schritt S150 erfolgt der eigentliche Zugversuch, bei welchem die Prüfkörpereinheit PKE in eine Querzugmaschine eingespannt und bis zum Bruch des Prüfkörpers PK mit einer Querzugkraft beaufschlagt wird.

Die Jochpaare mit den nun aufgebrochenen Prüfkörperresten werden sodann einer visuellen Evaluierung zugeführt. Die Evaluierung umfasst eine manuelle Sichtprobe in Schritt S162 sowie eine Bildaufnahme in Schritt S164 mit anschließender automatischer Bildanalyse in Schritt S166. Anschließend erfolgt in Schritt S168 eine Beurteilung des Prüfkörpers PK, etwa in Form einer Gut-/Schlechtklassifizierung oder feinerer Klassifizierung und/oder einer Protokollierung von Prüfparametern. Es ist darauf hinzuweisen, dass die manuelle Sichtprobe in Schritt 162 entfallen oder auf wenige Stichproben beschränkt werden kann. Vorzugsweise werden aber die Jochpaare mit den nun aufgebrochenen Prüfkörperresten jedenfalls zur Sichtprobe bereitgehalten.

Nach der Sichtprüfung werden die Joche J1, J2 gereinigt (Schritt S170), woraufhin ein Zyklus des Prüfprozesses 100 endet. Für die Joche J1, J2 kann noch eine Rückführung und Zuführung zu einer Montageeinheit erfolgen (Schritt S180), um in einem weiteren Zyklus des Prozesses 100 mit einem anderen Prüfkörper PK zu einer Prüfkörpereinheit PKE verbunden zu werden.

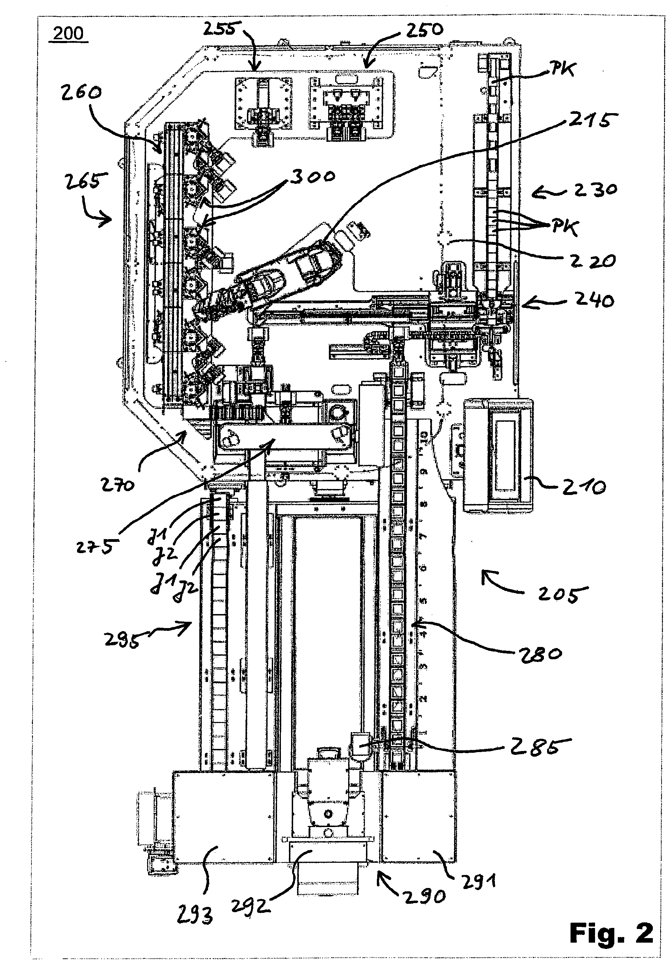

Fig. 2 ist eine Draufsicht einer Querzugprüfanlage 200 gemäß einem zweiten Ausführungsbeispiel der vorliegenden Erfindung. Die Querzugprüfanlage 200 ist zur Durchführung des Verfahrens gemäß dem Prozess 100 von Fig. 1 ausgebildet und ist eine Vorrichtung zur Querzugprüfung im Sinne der vorliegenden Erfindung.

Die Anlage 200 weist ein Maschinengestell 205, eine Steuereinheit 210 und einen Roboterarm 215 auf. Der Roboterarm 215 bewegt sich in einer Reinraumatmosphäre bzw. einem Reinraumvolumen, das durch eine Einhausung 220 begrenzt ist. Eine Aufgabestation 230 dient der Aufnahme einer Vielzahl von Prüfkörpern PK. Die Prüfkörper PK werden von außerhalb bereits vordimensioniert angeliefert und auf die Aufgabestation 230 gegeben. Die Aufgabestation 230, die z. B. eine Rollenbahn mit Gefälle oder ein Förderband oder dergleichen aufweisen kann, führt die Prüfkörper PK einer Grobreinigungsstation 240 zu. Auf der Rollenbahn können stets eine Anzahl von Prüfkörpern zur Weiterverarbeitung bereitgehalten werden. In der Grobreinigungsstation 240 werden die Prüfkörper PK von Staub und Schmutz befreit. Die Grobreinigungsstation 240 weist z. B. ein Gebläse und eine Absaugung auf, um die Prüfkörper PK abzublasen und den abgeblasenen Staub und Schmutz abzusaugen.

Die Grobreinigungsstation 240 bildet eine Schnittstelle zu dem Reinraum und wird über eine Schleuse (nicht näher dargestellt) zur Aufnahme durch den Roboterarm 215 in den Reinraum geführt.

Eine Vermessungsstation 250 und eine Wiegestation 255 sind innerhalb des Reinraums (der Einhausung 220) vorgesehen, um jeden Prüfkörper PK einer Dickenmessung und einer Wiegung zu unterziehen. Die Vermessungs- und Wiegeergebnisse werden zur Ermittlung einer mittleren Dichte jedes Prüfkörpers PK herangezogen. Der formelmäßige Zusammenhang zur Dichtebestimmung wurde vorstehend beschrieben und wird hier nicht erneut ausgeführt.

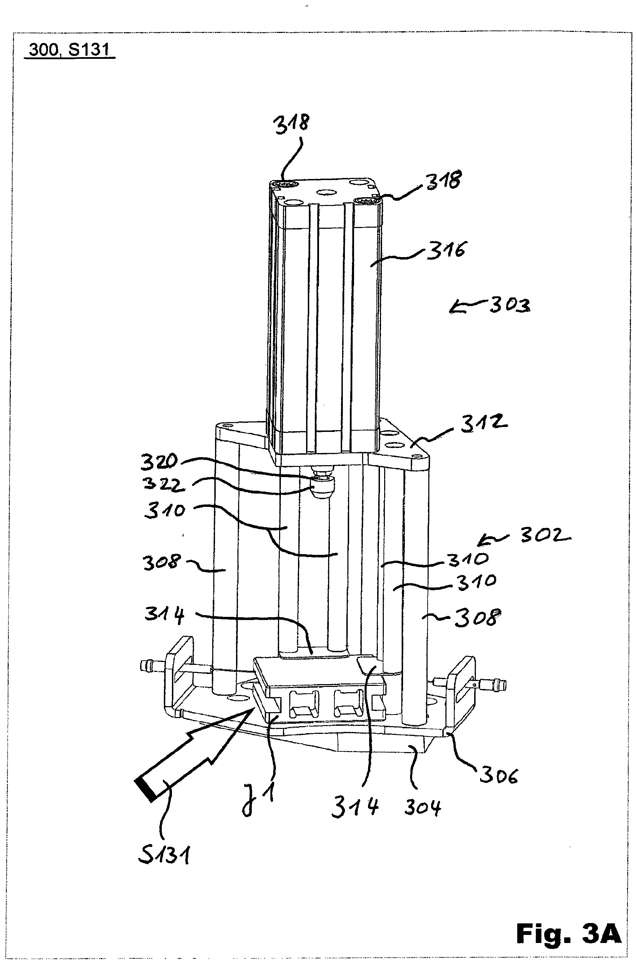

Eine Montage- und Aushärtestrecke 260 sieht eine oder eine Mehrzahl von Klebestationen 265 vor, die jeweils einer oder mehreren Montageeinheiten 300 zugeordnet sind. Jede Montageeinheit 300 dient der Aufnahme von Jochen J1, J2 und Prüfkörpern PK, um diese miteinander zu verkleben. Die Montageeinheiten 300 werden später anhand der Fign. 3A bis 3E im Einzelnen näher erläutert. Im Rahmen dieser Übersicht sollte nur erwähnt werden, dass nach Durchlaufen der Montage- und Aushärtestrecke 260 jeweils zwei Joche J1, J2 und ein Prüfkörper PK, der zwischen den zwei Jochen J1, J2 aufgenommen ist, eine fest verklebte Prüfkörpereinheit PKE bilden. Eine Vereinzelungsstation 270 ist ausgebildet, um die fertig ausgehärteten Prüfkörpereinheiten PKE zu vereinzeln und zur Prüfung bereitzustellen. Von dort werden die Prüfkörpereinheiten PKE einer Prüfstation 275 zugeführt. Hierzu kann erneut der Roboterarm 215 verwendet werden; die Vereinzelung kann auch auf eine Wartestation erfolgen, von welcher aus die Prüfkörpereinheiten PKE unabhängig von dem Roboterarm 215 von der Prüfstation 275 aufgenommen werden.

Die Prüfstation 275 ist vorgesehen, um in an sich bekannter Weise die Joche J1, J2 jeder Prüfkörpereinheit PKE aufzunehmen bzw. einzuspannen und quer zur Normalenrichtung gegenläufig zu ziehen, bis der Prüfkörper PK, der zwischen den zwei Jochen J1, J2 aufgenommen ist, bricht. Die Prüfstation 275 ist selbst gekapselt und weist eine Absaugung auf, um beim Bruch des Prüfkörpers entstehende Stäube und lose Bruchstücke abzusaugen, und weist ferner eine Schleuse zu einer sogleich beschriebenen Sichtprobenstrecke 280 auf.

Die Sichtprobenstrecke 280 ist vorgesehen, um Paare von Jochen mit darauf befindlichen Resten gebrochener Prüfkörper jeweils mit der Bruchfläche nach oben aufzunehmen und sowohl für eine manuellen stichprobenweisen Sichtprüfung als auch für eine Bildaufnahme und Bildanalyse zur automatisierten Sichtprüfung bereitzuhalten. Ein Greifer 285 ist vorgesehen, um Joche mit Prüfkörperresten von der Sichtprobenstrecke 280 zu entnehmen und einer Abreinigungsstation 290 zuzuführen. Anstelle eines Greifers sind auch herkömmliche Schwerkraftvereinzeler oder dergleichen möglich.

Die Abreinigungsstation 290 ist ausgebildet, um die Joche von den Prüfkörperresten zu reinigen und einer Jochrückführung 295 zuzuführen, von wo aus sie wieder über eine Schleuse (nicht näher dargestellt) dem Reinraum (Einhausung 220) zur Ergreifung durch den Roboterarm 215 zugeführt werden.

Im Betrieb laufen die Prüfkörper PK zunächst über die Aufgabestation 230 in die Grobreinigungsstation 240, wo sie wie vorher beschrieben gereinigt und dem Reinraum 220 zugeführt werden. Von dort werden die gereinigten Prüfkörper PK nach und nach von dem Roboterarm 215 ergriffen und auf der Vermessungsstation 250 abgelegt. Nach Vermessung in der Vermessungsstation 250 werden die Prüfkörper wieder von dem Roboterarm 215 ergriffen und auf der Wiegestation 255 abgelegt. Nach dem Wiegen in der Wiegestation 255 wird zunächst ein erstes Joch J1, das über die Jochrückführung 295 dem Reinraum zugeführt worden ist, durch den Roboterarm 215 ergriffen und einer der Montageeinheiten 300 der Klebestation 265 zugeführt. Durch eine nicht näher dargestellte Klebstoffauftragungseinheit wird das erste Joch J1 mit einer definierten Menge an Klebstoff in einem definierten Muster benetzt, woraufhin der gewogene Prüfkörper PK der Wiegestation 255 durch den Roboterarm 215 entnommen wird und auf dem in der Montageeinheit 300 befindlichen, mit Klebstoff benetzten ersten Joch J1 abgelegt und mit Druck beaufschlagt. Nach einer geringen Aushärtungszeit wird ein zweites Joch J2, das über die Jochrückführung 295 dem Reinraum zugeführt worden ist, durch den Roboterarm 215 aufgenommen und auf dem Prüfkörper PK in der Montageeinheit 300 abgelegt, nachdem durch die Klebstoffauftragungseinheit eine definierte Klebstoffmenge in einem definierten Muster auf der freien Oberfläche des Prüfkörpers PK aufgetragen worden ist. Dann wird das Joch J2 mit Druck beaufschlagt und der gesamte Kleberverbund aus erstem Joch J1, Prüfkörper PK und zweitem Joch J2 aushärten gelassen. Nach Entnahme der so entstandenen Prüfkörpereinheit durch den Roboterarm 215 und Ablage in der Vereinzelungsstation 270 wird die Prüfkörpereinheit PKE in der Prüfstation 295 wie oben beschrieben bis zur Zerstörung geprüft und die entstandenen Hälften auf der Sichtprobenstrecke 280 abgelegt und der Evaluierung unterzogen. Nach erfolgter Evaluierung werden die Joche J1, J2 der Sichtprobenstrecke 280 durch den Greifer 285 entnommen und in der Abreinigungsstation 290 gereinigt, um anschließend auf der Jochrückführung 295 abgelegt und zur weiteren Verwendung bereitgehalten zu werden.

Die Abreinigungsstation 290 weist eine Fräseinheit 291, eine Bedampfungseinheit 292 und eine Poliereinheit 293 auf. In der Fräseinheit 291 werden die Prüfkörper- und Klebstoffreste von den Jochen auf Übermaß, d. h., bis kurz über der Oberfläche, abgefräst. In der anschließenden Bedampfungseinheit 292 wird die abgefräste Oberfläche des Jochs mit Heißdampf beaufschlagt. Der Heißdampf für diese Bedampfungseinheit 292 wird der Prüfanlage 200 von anderen Prozessen wie etwa dem Herstellungsprozess einer Verleimungsanlage zur Herstellung von Platten, denen die Prüfkörper PK entnommen sind, zugeführt. In der Poliereinheit 293 werden die Joche von letzten, durch die Bedampfung aufgeweichten und angelösten Resten befreit und poliert. Sodann werden die Joche der Jochrückführung zugeführt, wo sie in einer Reihenfolge erstes Joch J1 → zweites Joch J2 → erstes Joch J1 → zweites Joch J2 usw. dem Reinraum zur weiteren Verwendung zugeführt werden.

Der zum Verkleben der Prüfkörper PK mit den Jochen J1, J2 verwendete Klebstoff ist im vorliegenden Ausführungsbeispiel ein Cyanidkleber, genauer gesagt, ein Isocyanat-Kleber. Dieser Kleber ist für Heißdampf besonders empfindlich und wird daher in der Bedampfungseinheit 292 gut angelöst. Auch bei der Herstellung z. B. von Spanplatten oder MDF-Platten wird häufig ein Verleimungssystem auf Isocyanat-Basis verwendet, sodass der bei der Verklebung der Prüfkörper mit den Jochen J1, J2 verwendete Klebstoff einerseits gut zu dem zur Verleimung des Prüfkörpers selbst verwendeten System passt und andererseits durch die Bedampfung in der Bedampfungseinheit 292 wirksam angelöst wird.

Optional oder alternativ zu der Bedampfungseinheit 292 und/oder der Fräseinheit 291 kann eine kryogene Reinigungseinheit vorgesehen sein, welche die Joche schockartig auf tiefe Temperaturen kühlt und somit die auf den Jochen anhaftenden Prüfkörper- und Kleberreste versprödet. Dadurch können die Prüfkörper- und/oder Kleberreste entweder sofort von den Jochen abspringen oder ganz leicht entfernt werden. Die kryogene Reinigungseinheit kann eine Trockeneisbestrahlungseinheit umfassen, welche die Joche mit den Prüfkörper- und/oder Kleberresten mit Trockeneispartikeln bestrahlt. Hierdurch kann eine schockartige Abkühlung mit einem abrasiven Vorgang durch die Trockeneispartikel kombiniert werden.

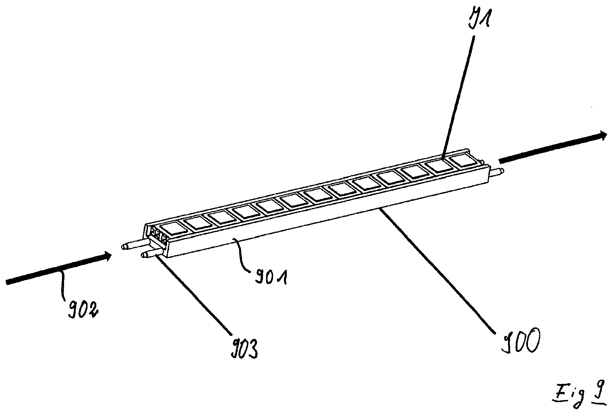

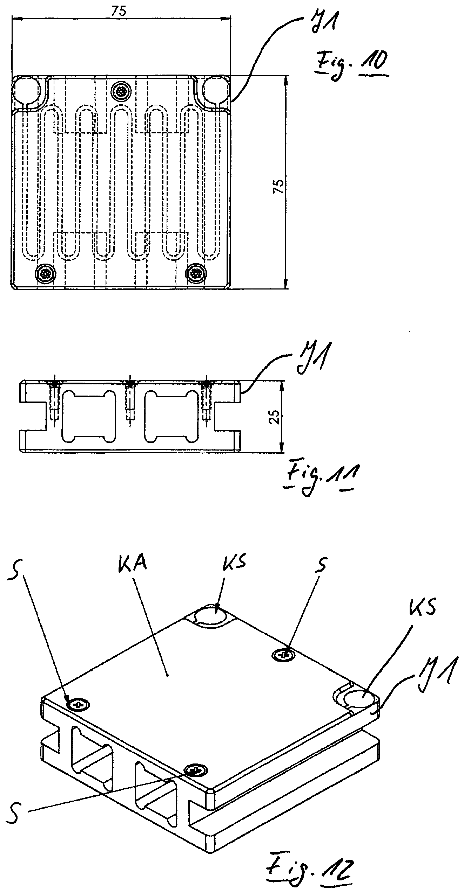

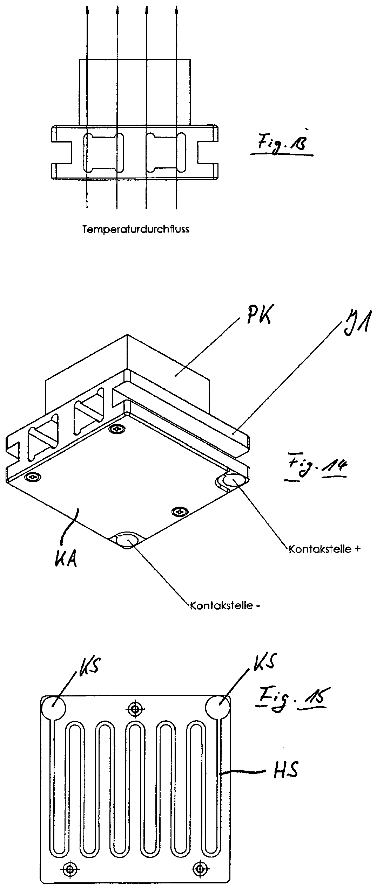

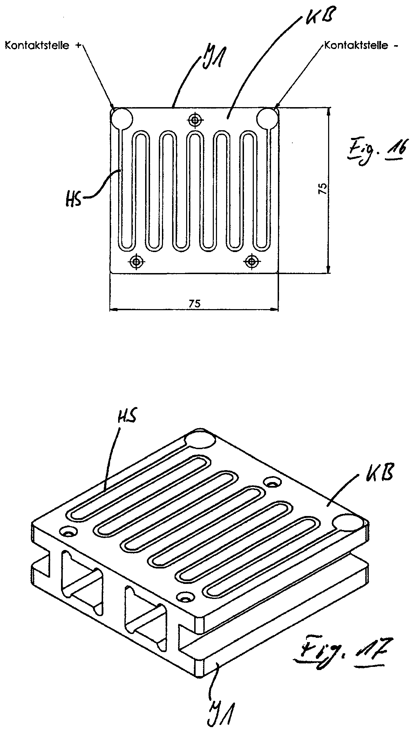

Optional oder alternativ kann zu der Bedampfungseinheit 292 und/oder der Fräseinheit und/oder der kryogenen Reinigungseinheit eine Reinigungseinheit vorgesehen sein, die mit Wärme arbeitet (Fig. 9 bis 17). Da der Kleber Temperaturen über 120°C nicht widersteht, kann vor dem Abreinigen ein jedes Joch auch erhitzt werden. Hierzu können die Joche J1 auf ihrer Unterseite eine aufgebrachte Keramikschicht KB besitzen, in die eine Heizschlange HS aufgedruckt oder in anderer Weise implementiert ist, auf jeden Fall aus einem Material besteht, welches sich beim Durchleiten von Strom erwärmt. Sind die Joche zusätzlich mit entsprechenden Kontaktpunkten KS versehen, können die Joche J1 (Fig. 10 bis 17) in einer Heizeinrichtung mit Strom beaufschlagt werden und anschließend nach ausreichender Beaufschlagung Kleberreste und/oder Kleber- und Prüfkörperreste abgebürstet oder abgefräst werden. Hierbei ist die temperaturerzeugende Schicht aus einer Keramik, der darin eingebetteten Heizschlange und den darin eingebetteten Kontaktstellen und einer darüber angeordneten weiteren keramischen Schicht KA auf der Unterseite der Joche angeordnet (Fig. 10, 15 bis 17) und die entstehende Wärme wird durch das Joch (Fig. 13) zum Prüfkörper bzw. zum Klebstoff geführt.

Hierzu kann es vorteilhaft sein, das Joch aus einem gut wärmeleitenden Material, z.B. Kupfer, auszubilden.

Alternativ oder zusätzlich hierzu können die Joche in der Abreinigungsstation oder vor der Abreinigungsstation entlang einer Förderrichtung 902 durch eine Erwärmungseinrichtung 900 (Fig. 9), insbesondere eine Heizschiene 901 geführt werden, welche mit einer Beheizungseinrichtung 903 beheizt ist und ihre Wärme über Wärmeleitung an die Joche abgibt.

Da in Baumaterialien auf Holzwerkstoffbasis wie etwa Spanplatten oder MDF-Platten stets eine gewisse Restfeuchte enthalten ist, kann der bei der Verklebung der Prüfkörper mit den Jochen verwendete Klebstoff auf Isocyanat-Basis das zur Härtung erforderliche Wasser aus der Restfeuchte im Werkstoff beziehen. Dies sorgt für eine gute Haftvermittlung und eine zuverlässige Verklebung, was ein weiterer Vorteil dieser speziellen Klebstoffauswahl ist.

Die in der Anlage 200 von Fig. 2 verwendete Montageeinheit 300 ist in Fign. 3A bis 3E in räumlicher Darstellung zu verschiedenen Zeitpunkten in dem Ablauf des Prozesses 100 von Fig. 1 dargestellt. Dabei ist die Montageeinheit 300 auch als ein weiteres Ausführungsbeispiel der vorliegenden Erfindung zu verstehen.

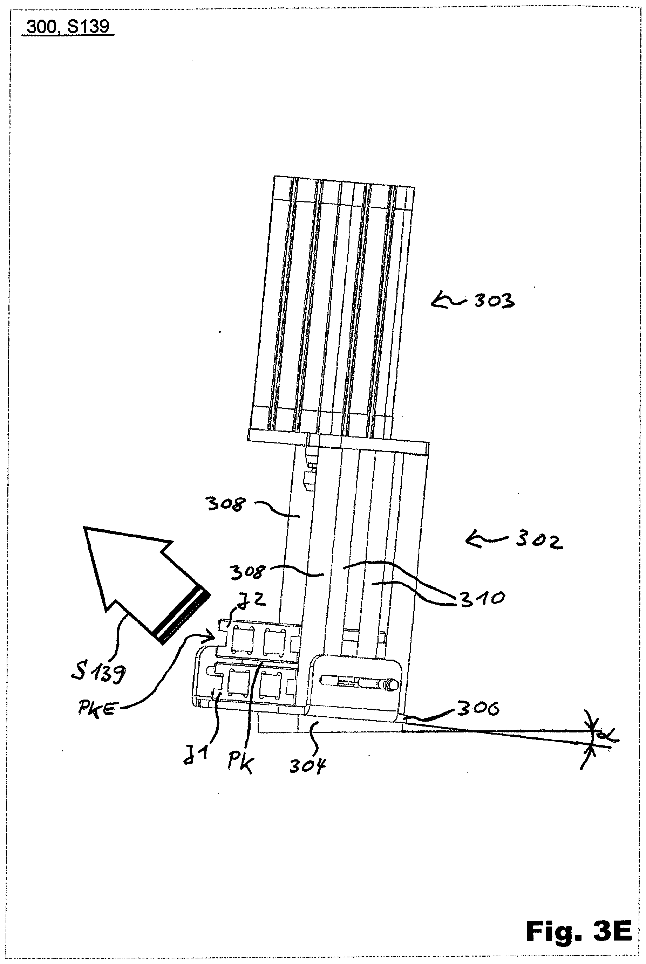

Gemäß der Darstellung in Fig. 3A weist die Montageeinheit 300 eine Aufnahmeeinheit 302 und eine Druckbeaufschlagungseinheit 303 auf. Die Aufnahmeeinheit 302 weist eine keilförmige Basis 304 und eine darauf angebrachte Auflageplatte 306 auf. Wie in Fig. 3E am besten ersichtlich, weist die Basis 304 einen Keilwinkel $\alpha$ auf und ist somit die auf der Basis 304 montierte Auflageplatte 306 um den Keilwinkel $\alpha$ gegenüber der Horizontalen geneigt. Zurück zu Fig. 3A, erstrecken sich von der Auflageplatte 306 aus mehrere Stützsäulen 308 sowie mehrere Anschlagsäulen 310 senkrecht von der Auflageplatte 306 aus weg und enden in einer Flanschplatte 312. Die Flanschplatte 312 ist parallel zu der Auflageplatte 306 montiert. Die Anschlagsäulen 310 bzw. deren Anordnung spannen im Querschnitt gesehen einen rechten Winkel auf, wobei eine Basis des von den Anschlagsäulen 310 aufgespannten rechten Winkels in der Nähe des tiefsten Endes bzw. der tiefsten Ecke der Auflageplatte 306 angeordnet ist und sich die Winkelhalbierende des rechten Winkels zu der höheren Kante der Auflageplatte 306 hin erstreckt. Von den Anschlagsäulen 310 aus, die einen Schenkel des rechten Winkels bilden, erstreckt sich jeweils eine Anschlaglasche 314 in den von dem rechten Winkel aufgespannten Innenraum.

Die Druckbeaufschlagungseinheit 303 weist einen Zylinder 316 auf, der mittels geeigneter Verbindungselemente 318 an der Flanschplatte 312 angebracht ist. Eine Kolbenstange 320 des Zylinders 316 mit einem Stempel 322 an seinem unteren Ende erstreckt sich in den zwischen der Auflageplatte 306 und der Flanschplatte 312 befindlichen Raum.

In Fig. 3A ist ein Zustand dargestellt, der sich nach Einlegen eines ersten Jochs J1 in die Montageeinheit 300 darstellt (Schritt S131 in Fig. 1). Wie in Fig. 3A gezeigt, wird das erste Joch J1 derart in die Montageeinheit 300 eingelegt, dass eine seiner Flachseiten auf der Auflageplatte 306 zu liegen kommt und seitliche Kanten jeweils an den Anschlagsäulen 310 zu liegen kommen. Aufgrund seines Eigengewichts und der Neigung der Auflageplatte 306 ruht der erste Flansch J1 sicher an den Anschlagsäulen 310, die somit einen ersten Eckanschlag im Sinne der Erfindung bilden. Die Anschlaglaschen 314 erstrecken sich oberhalb des ersten Jochs J1 über dessen oben freiliegende Fläche. Obschon in der Figur nicht näher dargestellt, wird im weiteren Verlauf des Prozesses 100 von Fig. 1 auf der genannten freien oberen Oberfläche des ersten Jochs J1 in Schritt S132 der Klebstoff aufgetragen und in Schritt S133 der Prüfkörper PK in die Montageeinheit 300 eingelegt. Dabei kommt der Prüfkörper PK an den Anschlaglaschen 214 zu ruhen, die somit einen zweiten Eckanschlag im Sinne der Erfindung bilden.

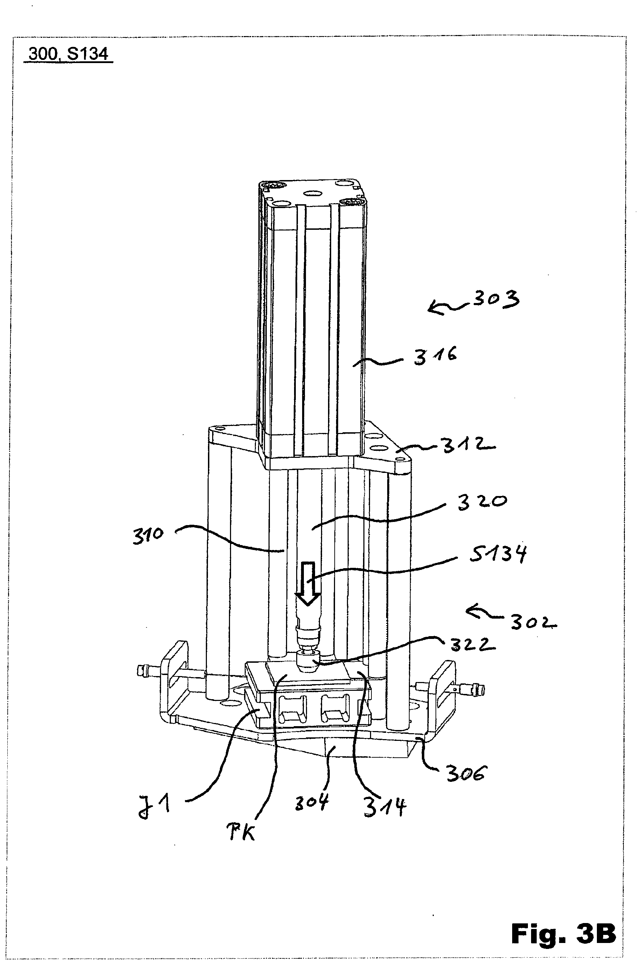

Fig. 3B zeigt die Montageeinheit 300 in einem Zustand, der dem Schritt S134 des Prozesses 100 von Fig. 1 entspricht. Dabei ist der Prüfkörper PK bereits auf der mit Klebstoff benetzten Oberfläche des ersten Jochs J1 abgelegt und an den beiden Anschlaglaschen 314 der Aufnahmeeinheit 302 der Montageeinheit 300 ausgerichtet. Dadurch stellt sich eine definierte relative Lage zwischen dem Prüfkörper PK und dem ersten Joch J1 ein. Wie in Fig. 3B gezeigt, wird der Prüfkörper PK an seiner freien Oberfläche durch den Stempel 322, der an dem Ende der nun ausgefahrenen Kolbenstange 320 des Zylinders 316 angebracht ist, mit Druck beaufschlagt.

Es folgen die hier nicht weiter dargestellten Prozessschritte S135 und S136, in welchem die freie obere Oberfläche des Prüfkörpers PK und/oder der Joche nach Zurückfahren der Kolbenstange 320 mit Klebstoff benetzt wird und anschließend das zweite Joch J2 in die Montageeinheit 300 eingebracht wird. Dabei kommt das zweite Joch J2 an den Anschlagsäulen 310 zu liegen, die somit einen dritten Eckanschlag bzw. einen kombinierten Eckanschlag im Sinne der Erfindung bilden.

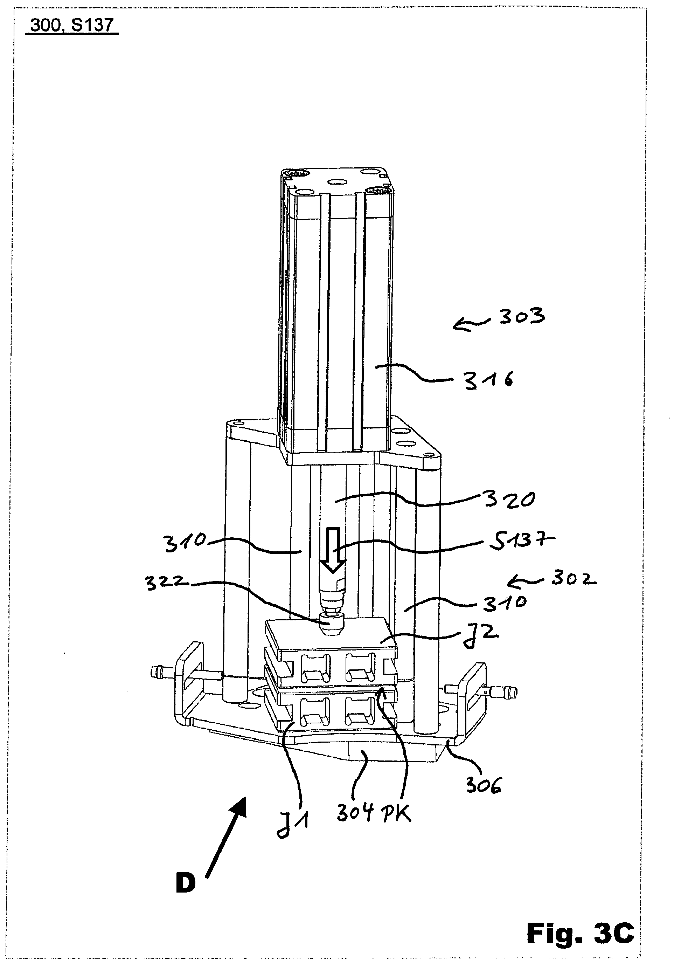

Fig. 3C zeigt die Montageeinheit 300 in einem Zustand, in welchem das auf dem Prüfkörper PK abgelegte zweite Joch J2 über den Stempel 322 der wieder ausgefahrenen Kolbenstange 320 des Zylinders 316 mit Druck beaufschlagt wird (Schritt S137). Wie in Fig. 3C gezeigt, liegen Kanten des zweiten Jochs J2 wiederum an den Anschlagsäulen 310 an und werden dort gehalten. Somit ist eine relative Lage des zweiten Jochs J2 gegenüber dem Prüfkörper PK und dem ersten Joch J1 definiert und festgelegt.

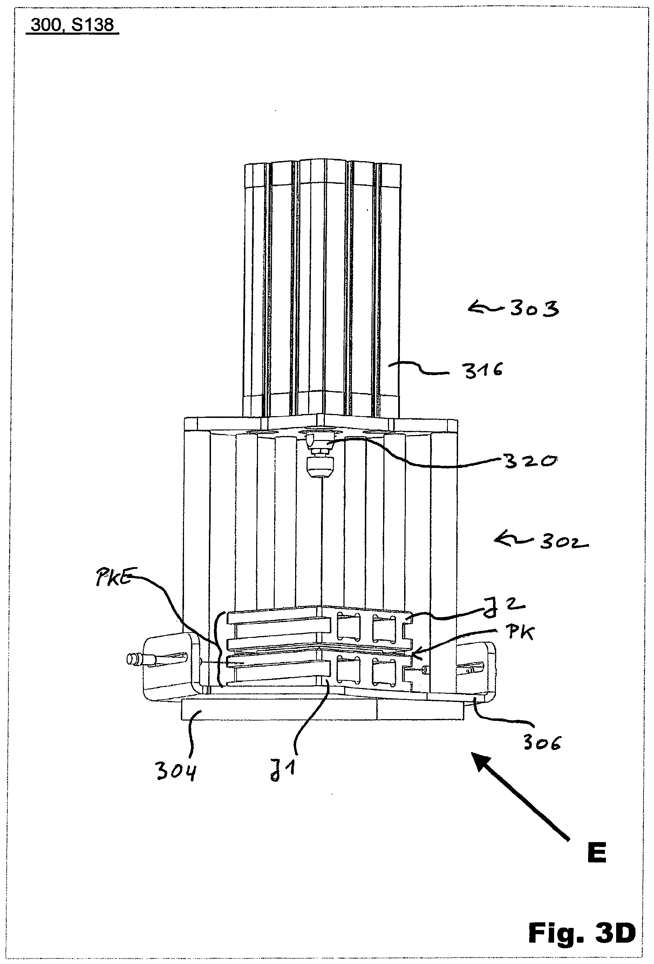

Fig. 3D zeigt die Montageeinheit 300 in dem Schritt S138 des Prozesses 100 von Fig. 1 aus einer gegenüber den Figuren 3A bis 3C leicht veränderten Perspektive, nämlich von vorne unten, wie durch einen Pfeil "D" in Fig. 3C angedeutet. Mit anderen Worten, das erste Joch J1, der Prüfkörper PK und das zweite Joch J2 härten aus und bilden die Prüfkörpereinheit PKE. Anschließend wird die Kolbenstange zurückgefahren.

Fig. 3E zeigt die Montageeinheit 300 in einem Zustand, der dem Prozessschritt S139 des Prozesses 100 von Fig. 1 entspricht, aus einer wiederum etwas anderen Perspektive, die durch einen Pfeil E in Fig. 3D angedeutet ist. Mit anderen Worten, Fig. 3E zeigt, angedeutet durch einen Pfeil, die Entnahme der Prüfkörpereinheit PKE aus der Montageeinheit 300 in dem Prozessschritt S139.

In Fig. 3E ist der Neigungswinkel der Auflageplatte 308 gegenüber der Horizontalen, der mit dem Keilwinkel $\alpha$ der Basis 306 identisch ist, am besten zu erkennen. Obschon in Fig. 3E ein vergleichsweise kleiner Keilwinkel $\alpha$ dargestellt ist, ist zu verstehen, dass der Keilwinkel $\alpha$ anhand der konkreten Gegebenheiten und Erfordernisse wie etwa einem sicheren Anliegen der Joche J1, J2 und des Prüfkörpers PK an den Anschlagsäulen 310 und den Anschlaglaschen 314 unter Beachtung der Material- und Oberflächenbeschaffenheit der Joche, insbesondere des Jochs J1, und der Auflageplatte 308 auszuwählen ist. Andererseits sollen die in die Aufnahmeeinheit eingelegten Joche J1, J2 und Prüfkörper PK bzw. die Prüfkörpereinheit PKE nicht nach hinten überkippen. In der Praxis hat sich gezeigt, dass der Keilwinkel $\alpha$ wenigstens 15 Grad betragen sollte und am besten zwischen 30 und 45 Grad liegen sollte.

Die Anschlagstangen 310 bilden einen ersten und einen dritten Eckanschlag bzw. einen kombinierten Eckanschlag im Sinne der Erfindung, und die Anschlaglaschen 314 bilden einen zweiten Eckanschlag im Sinne der Erfindung. Dabei können die Anschlagstangen 310 auch als weitere Stützsäulen verstanden werden, die auch als Anschlag dienen.

Es ist zu verstehen, dass die vorstehend beschriebenen und in den Figuren zeichnerisch dargestellten Ausführungsbeispiele nur eine mögliche Art, die Erfindung auszuführen, vollständig darstellen. Dem Fachmann werden aufgrund der hier dargestellten Offenbarung ohne schöpferisches Zutun vielfältige Abwandlungen und alternative Ausführungsformen einfallen, wie die Erfindung ausgeführt werden kann. Beispielsweise kann ein Eckanschlag in alternativen Ausführungsformen auch völlig unabhängig von jeder Stützfunktion in Bezug auf die Druckbeaufschlagungseinheit 303 ausgebildet sein. Anstelle einer Auflageplatte können Auflageschienen vorgesehen sein, um die Auflagefläche zu verringern und so eine Reibungskraft zwischen dem ersten Joch und der Auflagefläche zu verringern, sodass das erste Joch noch leichter an den Eckanschlag gedrückt werden kann und noch sicherer dorthinein gleitet.

Einzelne Merkmale, die in einem der oben beschriebenen Ausführungsbeispiele aufgeführt sind, in einem anderen Ausführungsbeispiel jedoch nicht, sind gleichwohl in allen andere Ausführungsbeispielen und -formen als offenbart anzusehen, es sei denn, es wäre explizit ausgeschlossen oder offensichtlich unmöglich. Beispielsweise kann, obschon nur im Zusammenhang mit dem Verfahren des ersten Ausführungsbeispiels beschrieben, das Klebersystem (d. i. ein Klebstoff auf Cyanid- bzw. Isocyanat-Basis) auch in der Montageeinheit 300 des dritten Ausführungsbeispiels und in der Querzugprüfungsanlage 200 des zweiten Ausführungsbeispiels verwendet werden. Eine dort eingesetzte Klebstoffauftragungseinheit und diesbezügliche Nebengerätschaften wie Klebstoffbereithaltung, -transport, -dosierung etc. können entsprechend an den speziellen Klebstoff angepasst sein.

Der Schutzumfang der vorliegenden Erfindung wird nur durch die beigefügten Ansprüche in deren möglichster Breite definiert, ohne durch Einzelheiten der vorstehend beschriebenen Ausführungsbeispiele eingeschränkt zu sein.

**Patentansprüche**

1.   Verfahren zur Querzugprüfung von Baumaterialien, welches die Schritte aufweist:

- Herrichten eines Prüfkörpers aus dem Baumaterial, wobei der Prüfkörper eine vorgegebene Geometrie aufweist (S112) ;
- Ankleben des Prüfkörpers zwischen einem ersten Joch und einem zweiten Joch mittels eines Klebstoffs;
- Anpressen jeweiliger Klebeflächen des Prüfkörpers, des ersten Jochs und des zweiten Jochs;
- Aushärtenlassen des Klebstoffs; und
- Aufbringen einer Querzugkraft bis zum Bruch des Prüfkörpers (S150),

**dadurch gekennzeichnet, dass**
in dem Schritt des Anklebens eine definierte Klebstoffmenge verwendet wird und das Anpressen mit einer definierten Anpresskraft in zueinander definierter und begrenzter Lage des Prüfkörpers, des ersten Jochs und des zweiten Jochs derart, dass durch Anlegen an einen Eckanschlag eine Bewegung des Prüfkörpers auf dem ersten Joch und des zweiten Jochs auf dem Prüfkörper jeweils begrenzt ist, durchgeführt wird.

2.   Verfahren gemäß Anspruch 1, **dadurch gekennzeichnet, dass** das Anpressen für eine definierte Anpresszeit erfolgt.

3.   Verfahren gemäß Anspruch 1 oder 2, **dadurch gekennzeichnet, dass** der Schritt des Anklebens die Schritte aufweist:

- Bereitstellen des ersten Jochs (S180, S131);
- Auftragen eines Klebstoffs auf dem ersten Joch und/oder einer ersten Seite des Prüfkörpers (S132);
- Aufsetzen des Prüfkörpers auf dem ersten Joch (S133);
- Bereitstellen des zweiten Jochs (S180);
- Auftragen eines Klebstoffs auf dem zweiten Joch und/oder einer zweiten Seite des Prüfkörpers, die von der ersten Seite abgewandt ist (S135); und
- Aufsetzen des zweiten Jochs auf dem Prüfkörper (S136),

wobei der Schritt des Anpressens einen einzigen Anpressschritt nach Aufsetzen des zweiten Jochs aufweist oder einen ersten Anpressschritt zwischen dem Aufsetzen des Prüfkörpers auf dem ersten Joch und einen zweiten Anpressschritt nach Aufsetzen des zweiten Jochs auf den Prüfkörper aufweist.

4.   Verfahren gemäß einem der vorstehenden Ansprüche, **dadurch gekennzeichnet, dass** der Klebstoff jeweils mit einer vorgegebenen Klebstoffgeometrie aufgetragen wird, wobei die vorgegebene Klebstoffgeometrie insbesondere eine Mehrzahl von Flecken, Streifen, Wellen, Kringeln, Ringen, Rahmen oder dergleichen aufweist.

5.   Verfahren gemäß einem der vorstehenden Ansprüche, **dadurch gekennzeichnet, dass** eine Rheologie des Klebstoffs so eingestellt ist, dass ein Eindringen des Klebstoffs in Oberflächen des Prüfkörpers vermieden oder minimiert wird.

6.   Verfahren gemäß einem der vorstehenden Ansprüche, **dadurch gekennzeichnet, dass** der Klebstoff gelartig ist.

7.   Verfahren gemäß einem der vorstehenden Ansprüche, **dadurch gekennzeichnet, dass** der Klebstoff ein Klebstoff auf Cyanidbasis, auf Basis eines Isocyanats, ist.

8. Verfahren gemäß einem der vorstehenden Ansprüche, **dadurch gekennzeichnet, dass** das Verfahren einen Schritt einer Evaluierung des Bruchergebnisses aufweist, wobei die Evaluierung eine vorzugsweise eine Bildaufnahme von Bruchflächen des Prüfkörpers (S164) und insbesondere eine Bildanalyse (S166) aufweist.

9. Verfahren gemäß einem der vorstehenden Ansprüche, **dadurch gekennzeichnet, dass** das Verfahren einen Schritt eines Reinigens des ersten Jochs und des zweiten Jochs von Resten des Prüfkörpers aufweist (S170), wobei der Schritt der Reinigung vorzugsweise wenigstens einen der Schritte aufweist:

   - Mechanisches Entfernen von Resten des Prüfkörpers, vorzugsweise bis knapp über die Oberfläche des ersten bzw. zweiten Jochs;
   - Beaufschlagen mit Heißdampf;
   - Kryogene Reinigung, insbesondere Abstrahlen mit Trockeneis;
   - Thermische Reinigung, insbesondere Aufheizen der Joche durch Wärmeleitung von außen oder Aufheizen der Joche durch Kontaktierung einer an den Jochen unterseitig angeordneten Heizeinrichtung, insbesondere Heizschlange.

10. Verfahren gemäß einem der vorstehenden Ansprüche, **dadurch gekennzeichnet, dass** das Verfahren einen Schritt einer Dichteprüfung vor dem Schritt des Anklebens aufweist, wobei der Schritt der Dichteprüfung vorzugsweise die Schritte einer Dickenmessung (S122) und eines Wiegens (S124) aufweist.

11. Verfahren gemäß einem der vorstehenden Ansprüche, **dadurch gekennzeichnet, dass** die Durchführung des Verfahrens automatisch, insbesondere robotisch, durchgeführt wird.

12. Montageeinheit (300) zur Herstellung einer Prüfkörpereinheit (PKE) mit einem zwischen zwei Jochen (J1, J2) verklebten Prüfkörper (PK), wobei die Prüfkörpereinheit (PKE) ausgebildet ist, um den Prüfkörper (PK) einer Querzugprüfung zu unterziehen, wobei die Montageeinheit (300) ausgebildet ist, um die Joche (J1, J2) mit dem dazwischen angeordneten Prüfkörper (PK) in zueinander definierter und begrenzter Lage derart, dass die Montageeinheit (300) eine Aufnahmeeinheit (302) aufweist, wobei die Aufnahmeeinheit (302) eine Auflageplatte (306) und einen Eckanschlag (310, 314) an einer Ecke der Auflageplatte (306) aufweist, wobei der Eckanschlag (310, 314) ausgebildet ist, um eine Bewegung des ersten Jochs (J1) auf der Auflageplatte (306), eines Prüfkörpers (PK) auf dem ersten Joch (J1) und eines zweiten Jochs (J2) auf dem Prüfkörper (PK) jeweils zu begrenzen, und derart, dass durch Anlegen an einen Eckanschlag eine Bewegung des Prüfkörpers auf dem ersten Joch und des zweiten Jochs auf dem Prüfkörper jeweils begrenzt ist, zur Verklebung miteinander aufzunehmen, wobei die Montageeinheit (300) zur Ausführung des Verfahrens nach einem der vorstehenden Ansprüche ausgebildet ist.

13. Montageeinheit (300) gemäß Anspruch 12, **dadurch gekennzeichnet, dass** der Eckanschlag einen ersten Eckanschlag (310), der an eine Kontur eines ersten Jochs (J1) angepasst ist, einen zweiten Eckanschlag (314), der an eine Kontur eines auf dem ersten Joch (J1) angeordneten Prüfkörpers (PK) angepasst ist, und einen dritten Eckanschlag (310), der an eine Kontur eines auf dem Prüfkörper (PK) angeordneten zweiten Jochs (J2) angepasst ist, aufweist, und/oder
der erste und der dritte Eckanschlag als ein durchgehender kombinierter Eckanschlag (310) ausgebildet sind und der zweite Eckanschlag (314) oberhalb der Auflageplatte (306) von dem kombinierten Eckanschlag (310) abragt, und/oder
der zweite Eckanschlag (314) in einer Höhe, die höher als eine Dicke des ersten Jochs (J1) ist, parallel oder im Wesentlichen parallel zu der Auflageplatte (306) von dem ersten bzw. dem kombinierten Eckanschlag (310) aus abragt und eine Bauhöhe aufweist, die geringer als eine Dicke des Prüfkörpers (PK) ist, wobei der dritte Eckanschlag (310) oberhalb des zweiten Eckanschlags (314) zurückspringt, und/oder
die Auflageplatte (306) gegenüber der Horizontalen in Richtung der Ecke mit dem Eckanschlag (310, 314) geneigt, wobei eine Neigung der Auflageplatte (306) insbesondere so bemessen ist, dass ein erstes darauf abgelegtes Joch (J1) darauf ohne äußeres Zutun in den Eckanschlag (310, 314) gleiten kann, wobei ein Neigungswinkel ($\alpha$) der Auflageplatte (306) zur Horizontalen mehr als 15 Grad, vorzugsweise 30 bis 45 Grad, beträgt, und/oder
die Montageeinheit (300) eine Druckbeaufschlagungseinheit (303) aufweist, wobei die Druckbeaufschlagungseinheit (303) insbesondere ausgebildet ist, um parallel oder im Wesentlichen parallel zu einer Flächennormalen des in der Montageeinheit (300) aufgenommenen Prüfkörpers (PK) und mit einem Druckschwerpunkt, der einem Flächenschwerpunkt des in der Montageeinheit (300) aufgenommenen Prüfkörpers (PK) entspricht oder im Wesentlichen entspricht, in Richtung einer Auflage des Prüfkörpers (PK) zu drücken, und/oder
die Druckbeaufschlagungseinheit (303) ausgelegt ist, eine definierte Presskraft bzw. einen definierten Druck auszuüben, und/oder

die Montageeinheit (300) ferner eine Klebstoffauftragungseinheit aufweist, die eingerichtet ist, auf Oberflächen des ersten Jochs und/oder des Prüfkörpers sowie des Prüfkörpers und/oder des zweiten Jochs eine definierte Klebstoffmenge, vorzugsweise in einem definierten Klebstoffmuster, aufzutragen und/oder

eine Düseneinheit der Klebstoffauftragungseinheit in einem Druckstempel (322) der Druckbeaufschlagungseinheit (303) integriert ist.

14. Vorrichtung (200) zur Querzugprüfung von Baumaterialien, wobei die Vorrichtung (200) aufweist: ein Gestell(205), eine Prüfkörperbereitstellungsstation (230) zur Bereitstellung von Prüfkörpern (PK), eine Jochbereitstellungsstation (295) zur Bereitstellung von Jochen (J1, J2), eine Klebestation (265) zum Verkleben von Prüfkörpern (PK) jeweils zwischen zwei Jochen (J1, J2), um jeweilige Prüfkörpereinheiten (PKE) mit einem zwischen zwei Jochen (J1, J2) verklebten Prüfkörper (PK) auszubilden, wobei die Klebestation wenigstens eine Montageeinheit (300) nach Anspruch 12 oder 13 aufweist, eine Querzugprüfstation (275) zum Aufbringen einer Querzugkraft auf eine Prüfkörpereinheit (PKE), und eine Transportanordnung zum Transportieren von Prüfkörpern (PK) und Jochen (J1, J2) bzw. Prüfkörpereinheiten (PKE) zwischen den jeweiligen Stationen der Vorrichtung auf.

15. Vorrichtung (200) gemäß Anspruch 14, **dadurch gekennzeichnet, dass** die Transporteinrichtung wenigstens einen Roboterarm (215), vorzugsweise genau einen Roboterarm, aufweist, und/oder

die Vorrichtung (200) ferner eine Klebstoffauftragungseinheit aufweist, die eingerichtet ist, auf Oberflächen des ersten Jochs (J1) und/oder des Prüfkörpers (PK) sowie des Prüfkörpers (PK) und/oder des zweiten Jochs (J2) eine definierte Klebstoffmenge, vorzugsweise in einem definierten Klebstoffmuster, aufzutragen und/oder

die Vorrichtung (200) eine Druckbeaufschlagungseinheit (303) aufweist, die ausgebildet ist, um parallel oder im Wesentlichen parallel zu einer Flächennormalen eines in der Klebestation (265) aufgenommenen Prüfkörpers (PK) und mit einem Druckschwerpunkt, der einem Flächenschwerpunkt des in der Klebestation (265) aufgenommenen Prüfkörpers (PK) entspricht oder im Wesentlichen entspricht, in Richtung einer Auflage des Prüfkörpers (PK) zu drücken, aufweist und/oder

die Klebstoffauftragungseinheit in einem Roboterarm (215) integriert ist und/oder

die Vorrichtung (200) ein Reinraumvolumen, in welchem zumindest der Roboterarm (215) und die Klebestation (265) untergebracht sind, aufweist und/oder

die Vorrichtung eine Abreinigungseinheit (290), die ausgebildet ist, Joche nach Gebrauch von Resten der Prüfkörper und des Klebstoffs zu reinigen, aufweist und/oder

die Vorrichtung eine Sichtprobenstrecke (280), die ausgebildet ist, um eine Mehrzahl von Paaren von erstem Joch (J1) und zweitem Joch (J2) mit jeweils darauf befindlichen Bruchstücken des jeweiligen Prüfkörpers (PK) nach dem Zugversuch zu präsentieren, aufweist und/oder

die Transporteinheit ausgebildet ist, um die Paare von erstem Joch (J1) und zweitem Joch (J2) mit jeweils darauf befindlichen Bruchstücken des jeweiligen Prüfkörpers (PK) mit nach oben weisenden Bruchstücken auf der Sichtprobenstrecke (280) abzulegen und/oder

die Sichtprobenstrecke (280) eine Bildaufnahmeeinheit und eine Bildanalyseeinheit aufweist, wobei die Bildaufnahmeeinheit ausgebildet ist, um die Bruchstücke der Prüfkörper (PK) bildlich zu erfassen, und die Bildanalyseeinheit ausgebildet ist, um die erfassten Bilder anhand vorgegebener Kriterien auszuwerten.

## Claims

1. A process for transverse tensile testing of building materials, comprising the following steps:

   - preparation of a test body from the building material, the test body having a predetermined geometry (S112);
   - adhesion of the test piece between a first yoke and a second yoke by means of an adhesive;
   - pressing on respective adhesive surfaces of the test piece, the first yoke and the second yoke;
   - allowing the adhesive to cure; and
   - application of a transverse tensile force until the fracture of the test piece (S150), **characterised in that**

   in the adhesion step a defined quantity of adhesive is used and the pressing is carried out with a defined pressing force in a defined and limited position relative to one another of the test piece, the first yoke and the second yoke in such a way that a movement of the test piece on the first yoke and of the second yoke on the test piece is limited in each case by positioning to a corner stop.

2. A process according to claim 1, **characterized in that** the pressing is carried out for a defined pressing time.

3. A process according to claim 1 or 2, **characterized in that** the adhesion step comprises the following steps:

- provision of the first yoke (S180, S131);
- application of an adhesive on the first yoke and/or first side of the test piece (S132) ;
- placing of the test piece on the first yoke (S133);
- provision of the second yoke (S180);
- application of an adhesive on the second yoke and/or a second side of the test piece facing away from the first side (S135); and
- placing of the second yoke on the test piece (S136),

wherein the step of pressing comprises a single pressing step after the placing of the second yoke or a first pressing step between the placing of the test piece on the first yoke and a second pressing step after the placing the second yoke on the test piece.

4. A process according to one of the above claims, **characterized in that** the adhesive is respectively applied with a predetermined adhesive geometry, wherein the predetermined adhesive geometry comprises in particular a plurality of spots, strips, waves, curls, rings, frames or the like.

5. A process according to one of the above claims, **characterized in that** a rheology of the adhesive is adjusted so that penetration of the adhesive into surfaces of the test piece is prevented or minimized.

6. A process according to one of the above claims, **characterized in that** the adhesive is gel-like.

7. A process according to one of the above claims, **characterized in that** the adhesive is an adhesive based on cyanide, based on an isocyanate.

8. A process according to one of the above claims, **characterized in that** the process comprises a step of evaluating the fracture result, wherein the evaluation preferably comprises an image acquisition of fracture surfaces of the test piece (S164) and in particular an image analysis (S166).

9. A process according to any of the foregoing claims, **characterized in that** the process comprises a step of cleaning (S170) the first yoke and the second yoke from residues of the test piece, the step of cleaning preferably comprising at least one of the following steps:

- mechanical removal of residues of the test piece, preferably up to just above the surface of the first or second yoke;
- application of hot steam;
- cryogenic cleaning, in particular blasting with dry ice;
- thermal cleaning, in particular heating the yokes by heat conduction from the outside or heating the yokes by contacting a heating device, in particular a heating coil, arranged on the underside of the yokes.

10. A process according to one of the above claims, **characterized in that** the process comprises a step of density testing prior to the step of adhesion, the step of density testing preferably comprising the steps of a thickness measurement (S122) and a weighing (S124).

11. A process according to one of the above claims, **characterized in that** the execution of the process is carried out automatically, in particular robotically.

12. A mounting unit (300) for manufacturing a test piece unit (PKE) having a test piece (PK) adhered between two yokes (J1, J2), wherein the test piece unit (PKE) is configured to subject the test piece (PK) to a transverse tensile test, wherein the mounting unit (300) is configured to receive the yokes (J1, J2) with the test body (PK) arranged therebetween in a defined and limited position relative to one another, such that the mounting unit (300) has a receiving unit (302), wherein the receiving unit (302) has a support plate (306) and a corner stop (310, 314) at a corner of the support plate (306), wherein the corner stop (310, 314) is configured to limit a movement of the first yoke (J1) on the support plate (306), a test piece (PK) on the first yoke (J1), and a second yoke (J2) on the test piece (PK), respectively, and such, that, by application to a corner stop, a movement of the test body on the first yoke and of the second yoke on the test body is respectively limited, for the adhesion to one another, wherein the mounting unit (300) is configured for the carrying out of the process according to one of the above claims.

**13.** A mounting unit (300) according to claim 12, **characterized in that** the corner stop has a first corner stop (310) which is adapted to a contour of a first yoke (J1), a second corner stop (314) which is adapted to a contour of a test body (PK) arranged on the first yoke (J1), and a third corner stop (310) which is adapted to a contour of a second yoke (J2) arranged on the test body (PK), and/or

the first and the third corner stop are formed as a continuous combined corner stop (310) and the second corner stop (314) projects above the support plate (306) from the combined corner stop (310), and/or

the second corner stop (314), at a height which is higher than a thickness of the first yoke (J1), projects in parallel or substantially in parallel to the support plate (306) from the first or combined corner stop (310) and has an overall height which is lower than a thickness of the test piece (PK), wherein the third corner stop (310) recedes above the second corner stop (314), and/or

the supporting plate (306) is inclined relative to the horizontal in the direction of the corner with the corner stop (310, 314), wherein an inclination of the supporting plate (306) is in particular dimensioned such that a first yoke (J1) deposited thereon can slide into the corner stop (310, 314) without external intervention, wherein an inclination angle ($\alpha$) of the supporting plate (306) relative to the horizontal is more than 15 degrees, preferably 30 to 45 degrees, and/or

the mounting unit (300) has a pressure application unit (303), wherein the pressure application unit (303) is configured in particular to press in the direction of a support of the test piece (PK) parallel or substantially parallel to a surface normal of the test piece (PK) accommodated in the mounting unit (300) and having a pressure centre which corresponds or substantially corresponds to a surface centre of gravity of the test piece (PK) accommodated in the mounting unit (300), and/or

the pressure application unit (303) is designed to exert a defined pressing force or a defined pressure, and/or

the mounting unit (300) further comprises an adhesive application unit which is configured to apply a defined amount of adhesive, preferably in a defined adhesive pattern, to surfaces of the first yoke and/or of the test piece as well as of the test piece and/or of the second yoke, and/or

a nozzle unit of said adhesive application unit is integrated in a pressure die (322) of said pressure application unit (303).

**14.** A device (200) for transverse tensile testing of building materials, wherein the device (200) comprises: a chassis (205), a test piece provision station (230) for the provision of test pieces (PK), a yoke provision station (295) for the provision of yokes (J1, J2), an adhesion station (265) for the adhesion of test pieces (PK) between respectively two yokes (J1, J2), to form respective test piece units (PKE) having a test piece (PK) adhered between two yokes (J1, J2), wherein the adhesion station comprises at least one mounting unit (300) according to claim 12 or 13, a transverse tensile testing station (275) for applying a transverse tensile force to a test piece unit (PKE), and a transport arrangement for transporting test pieces (PK) and yokes (J1, J2), respectively, and a transport arrangement for transporting test pieces (PK) and yokes (J1, J2), or test piece units (PKE), between the respective stations of the device.

**15.** A device (200) according to claim 14, **characterized in that** the transport device comprises at least one robot arm (215), preferably exactly one robot arm, and/or

the device (200) further comprises an adhesive application unit which is arranged to apply a defined quantity of adhesive, preferably in a defined adhesive pattern, to surfaces of the first yoke (J1) and/or of the test piece (PK) and of the test piece (PK) and/or of the second yoke (J2), and/or

the device (200) comprises a pressure application unit (303) which is configured to press parallel or substantially parallel to a surface normal of a test body (PK) accommodated in the adhesion station (265) and with a centre of pressure which corresponds or substantially corresponds to a surface centre of gravity of the test body (PK) accommodated in the adhesion station (265) in the direction of a support of the test body (PK), and/or

the adhesive application unit is integrated in a robot arm (215) and/or

the device (200) comprises a cleanroom volume in which at least the robot arm (215) and the adhesion station (265) are accommodated, and/or

the device comprises a cleaning unit (290) adapted to clean yokes after use from residues of the test pieces and the adhesive, and/or

the device comprises a visual test section (280) adapted to present a plurality of pairs of first yoke (J1) and second yoke (J2) with respective fragments of the respective test piece (PK) thereon after the tensile test, and/or

the transport unit is designed to deposit the pairs of first yoke (J1) and second yoke (J2) with respective fragments of the respective test piece (PK) located thereon with upwardly pointing fragments on the visual test section (280), and/or

the visual test section (280) comprises an image capture unit and an image analysis unit, wherein the image capture unit is adapted to capture the fragments of the test pieces (PK) imagewise, and the image analysis unit is adapted to evaluate the captured images according to predetermined criteria.

**Revendications**

1. Un procédé d'essai de traction transversale de matériaux de construction, qui comprend les étapes suivantes:

   - la préparation d'un corps d'essai à partir du matériau de construction, le corps d'essai ayant une géométrie prédéterminée (S112);
   - le collage du corps d'essai entre un premièr joug et un second joug à l'aide d'un adhésif ;
   - la pression de surfaces adhésives respectives du corps d'essai, du premièr joug et du second joug;
   - le laisser durcir de l'adhésif ; et
   - l'application d'une force de traction transversale jusqu'à ce que le corps d'essai (S150) se brise,

   **caractérisé en ce qu'**une quantité définie de colle est utilisée dans l'étape de collage et la pression est effectuée avec une force de pression définie dans une position définie et limitée l'une par rapport à l'autre du corps d'essai, du premièr joug et du second joug de telle sorte qu'un mouvement du corps d'essai sur le premier joug et du second joug sur le corps d'essai est limité dans chaque cas par dressage à une butée d'angle.

2. Un procédé selon la revendication 1, **caractérisé en ce que** la pression est effectuée pendant un temps de pression défini.

3. Un procédé selon la revendication 1 ou 2, **caractérisé en ce que** l'étape de collage comprend les étapes suivantes:

   - la fourniture du premier joug (S180, S131) ;
   - l'application d'un adhésif sur le premier joug et/ou le premier côté du corps d'essai (S132) ;
   - le placement du corps d'essai sur le premier joug (S133) ;
   - la fourniture du second joug (S180) ;
   - l'application d'un adhésif sur le second joug et/ou un second côté du corps d'essai tourné vers l'extérieur du premier côté (S135); et
   - le placement du second joug sur le corps d'essai (S136),

   dans lequel l'étape de pression comprend une seule étape de pression après la mise en place du second joug ou une première étape de pression entre la mise en place du corps d'essai sur le premier joug et une seconde étape de pression après la mise en place du second joug sur le corps d'essai.

4. Un Procédé selon l'une des revendications précédentes, **caractérisé en ce que** l'adhésif est appliqué avec une géométrie d'adhésif prédéterminée, la géométrie d'adhésif prédéterminée comprenant en particulier une pluralité de taches, bandes, ondulations, boucles, anneaux, cadres ou analogues.

5. Un procédé selon l'une des revendications précédentes, **caractérisé en ce qu'**une rhéologie de l'adhésif est ajustée de sorte à empêcher ou minimiser la pénétration de l'adhésif dans les surfaces du corps d'essai.

6. Un procédé selon l'une des revendications précédentes, **caractérisé en ce que** l'adhésif est de type gel.

7. Un procédé selon l'une des revendications précédentes, **caractérisé en ce que** l'adhésif est un adhésif à base de cyanure, à base d'un isocyanate.

8. Un procédé selon l'une des revendications précédentes, **caractérisé en ce que** le procédé comprend une étape d'évaluation du résultat de la fracture, l'évaluation comprenant de préférence une acquisition d'image de surfaces de fracture du corps d'essai (S164) et en particulier une analyse d'image (S166).

9. Un procédé selon l'une des revendications précédentes, **caractérisé en ce que** le procédé comprend une étape de nettoyage (S170) du premier joug et du second joug de résidus du corps d'essai, l'étape de nettoyage comprenant de préférence au moins une des étapes suivantes:

   - l'enlèvement mécanique des résidus du corps d'essai, de préférence juste au-dessus de la surface du premier ou du second joug ;
- l'application de vapeur surchauffée ;
- le nettoyage cryogénique, en particulier application de jet de glace carbonique ;
- le nettoyage thermique, en particulier chauffage des jougs par conduction thermique de l'extérieur ou chauffage des jougs par contact avec un dispositif de chauffage, en particulier un serpentin chauffant, disposé sur la face inférieure des jougs.

10. Un procédé selon l'une des revendications précédentes, **caractérisé en ce que** le procédé comprend une étape de contrôle de densité avant l'étape de collage, l'étape de contrôle de densité comprenant de préférence les étapes d'une mesure d'épaisseur (S122) et d'un pesage (S124).

11. Un procédé selon l'une des revendications précédentes, **caractérisé en ce que** le procédé est effectué automatiquement, en particulier de manière robotisée.

12. Une unité de montage (300) pour la fabrication d'une unité de corps d'essai (PKE) comportant un corps d'essai (PK) collé entre deux jougs (J1, J2), dans laquelle l'unité de corps d'essai (PKE) est conçue pour soumettre le corps d'essai (PK) à un essai en traction transversale, dans laquelle l'unité de montage (300) est conçue autour des jougs (J1, J2) avec le corps d'essai (PK) disposé entre ceux-ci dans une position définie et limitée l'une par rapport à l'autre, de sorte que l'unité de montage (300) présente une unité de réception (302), dans laquelle l'unité de réception (302) présente une plaque support (306) et une butée d'angle (310, 314) au niveau d'un angle de la plaque de support (306), dans laquelle la butée d'angle (310, 314) est adaptée pour limiter le mouvement du premier joug (J1) sur la plaque de support (306), d'une pièce d'essai (PK) sur le premier joug (J1) et d'un second joug (J2) sur la pièce d'essai (PK) respectivement, et de telle sorte, que par application à une butée d'angle un mouvement du corps d'essai sur le premier joug et du second joug sur le corps d'essai est respectivement limité, pour la réception pour le collage ensemble, l'unité de montage (300) étant conçue pour exécuter le procédé selon l'une des revendications précédentes.

13. Une unité de montage (300) selon la revendication 12, **caractérisée en ce que** la butée d'angle présente une première butée d'angle (310) qui est adaptée à un contour d'un premier joug (J1), une deuxième butée d'angle (314) qui est adaptée à un contour d'un corps d'essai (PK) disposé sur le premier joug (J1), et une troisième butée d'angle (310) qui est adaptée à un contour d'un second joug (J2) disposé sur le corps d'essai (PK), et/ou
la première et la troisième butée d'angle sont formées sous la forme d'une butée d'angle combinée continue (310) et la deuxième butée d'angle (314) fait saillie au-dessus de la plaque de support (306) depuis la butée d'angle combinée (310), et/ou
la deuxième butée d'angle (314), à une hauteur qui est supérieure à une épaisseur du premier joug (J1), fait saillie parallèlement ou sensiblement parallèlement à la plaque de support (306) depuis la première butée d'angle ou la butée d'angle combinée (310) et a une hauteur totale qui est inférieure à une épaisseur de la pièce d'essai (PK), dans laquelle la troisième butée d'angle (310) est en retrait au-dessus du second joug (314), et/ou
la plaque de support (306) est inclinée par rapport à l'horizontale en direction de l'angle avec la butée d'angle (310, 314), une inclinaison de la plaque de support (306) étant en particulier dimensionnée de telle sorte qu'un premier joug (J1) déposé sur celle-ci peut glisser dans la butée d'angle (310, 314) sans intervention extérieure, un angle d'inclinaison ($\alpha$) de la plaque de support (306) par rapport à l'horizontale dépassant 15°, de préférence 30 à 45°, et/ou
l'unité de montage (300) présente une unité d'application de pression (303), l'unité d'application de pression (303) étant conçue en particulier pour presser parallèlement ou sensiblement parallèlement à une normale à la surface du corps d'essai (PK) monté dans l'unité de montage (300) et avec un centre de pression qui correspond ou correspond sensiblement à un barycentre du corps d'essai (PK) monté dans l'unité de montage (300), dans la direction d'un support du corps d'essai (PK), et/ou
l'unité d'application de pression (303) est conçue pour exercer une force de pression définie ou une pression définie, et/ou
l'unité de montage (300) comprend en outre une unité d'application d'adhésif qui est configurée pour appliquer une quantité définie d'adhésif sur des surfaces du premier joug et/ou du corps d'essai ainsi que du corps d'essai et/ou du second joug, de préférence selon un motif d'adhésif défini; et/ou
une unité de buse de l'unité d'application d'adhésif est intégrée dans une matrice de pression (322) de ladite unité d'application de pression (303).

14. Un dispositif (200) pour essais de traction transversale de matériaux de construction, le dispositif (200) comprenant : un châssis (205), une station de fourniture de corps d'essai (230) pour la fourniture de corps d'essai (PK), une station de fourniture de joug (295) pour la fourniture de jougs (J1, J2), une station de collage (265) pour le collage de corps d'essai (PK) respectif entre deux jougs (J1, J2) afin de former des unités de corps d'essai respectives (PKE) avec un corps d'essai (PK) collé entre deux jougs (J1, J2), dans lequel la station de collage comprend au moins une unité de montage (300) selon la revendication 12 ou 13, une station d'essai de traction transversale (275) pour appliquer une force de traction transversale à une unité de corps d'essai (PKE), et un dispositif de transport pour le transport de corps d'essai (PK) et de jougs (J1, J2) ou d'unités de corps d'essai (PKE) entre les stations respectives du dispositif.

15. Un dispositif (200) selon la revendication 14, **caractérisé en ce que** le dispositif de transport comprend au moins un bras de robot (215), de préférence exactement un bras de robot, et/ou

le dispositif (200) comprend en outre une unité d'application d'adhésif qui est adaptée pour appliquer une quantité d'adhésif définie sur des surfaces du premier joug et/ou du corps d'essai ainsi que du corps d'essai et/ou du second joug, de préférence selon un motif d'adhésif défini; et/ou

le dispositif (200) comporte une unité d'application de pression (303) qui est conçue pour presser parallèlement ou sensiblement parallèlement à une normale à la surface du corps d'essai (PK) intégré dans la station de collage (265) et avec un centre de pression qui correspond ou correspond sensiblement à un barycentre du corps d'essai (PK) intégré dans la station de collage (265), dans la direction d'un support du corps d'essai (PK), et/ou

l'unité d'application de colle est intégrée dans un bras de robot (215) et/ou le dispositif (200) comporte un volume de salle blanche dans lequel au moins le bras du robot (215) et la station de collage (265) sont logés et/ou

le dispositif comporte une unité de nettoyage (290), qui est configurée pour nettoyer les jougs de résidus de corps d'essai et d'adhésif après utilisation, et/ou

le dispositif comporte une section d'essai visuel (280) qui est conçue pour présenter une pluralité de paires de premier joug (J1) et second joug (J2) avec des fragments du corps d'essai (PK) respectif respectivement situés sur ceux-ci après l'essai de traction, et/ou

l'unité de transport est configurée pour déposer les paires de premier joug (J1) et second joug (J2) avec des fragments du corps d'essai respectif (PK) respectivement situés sur ceux-ci avec les fragments pointant vers le haut sur la section d'essai visuel (280) et/ou

la section d'essai visuel (280) comporte une unité de prise d'image et une unité d'analyse d'image, dans laquelle l'unité de prise d'image est adaptée pour une prise d'images des fragments des corps d'essai (PK), et l'unité d'analyse d'image est adaptée pour évaluer les images prises en fonction de critères prédéterminés.

**Fig. 1**

**Fig. 2**

300, S131

318

318

316

303

312

320
322
310

302
310
310

308

308

314

314    304

306

S131

**Fig. 3A**

EP 3 121 582 B1

300, S134

303

316

312

320

310

S134

302

322

J1

PK

304

314

306

**Fig. 3B**

24

300, S137

303

316

320

310

S137

302

322

310

J2

J1  304 PK

306

D

**Fig. 3C**

300, S138

Fig. 3D

300, S139

**Fig. 3E**

Fig. 4

Fig. 5

Fig. 6

Fig. 7

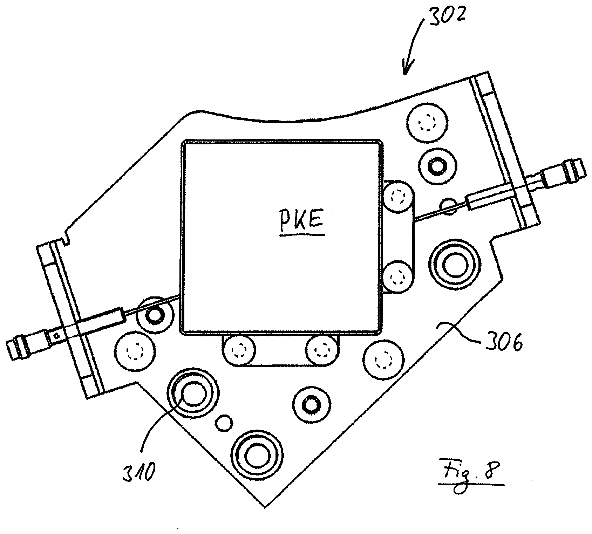

Fig. 8

Fig 9

75

*Fig. 10*

75

*Fig. 11*

25

S   KA   KS   S

KS

S

*Fig. 12*

34

*Fig. 13*

Temperaturdurchfluss

PK

*Fig. 14*

Kontakstelle +

KA

Kontakstelle -

KS          KS

*Fig. 15*

H.S

Kontaktstelle +

Kontaktstelle -

KB

Y1

HS

Fig. 16

75

75

HS

KB

Fig. 17

Y1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3438969 C1